(19) Europäisches Patentamt
European Patent Office
Office européen des brevets

(11) EP 4 265 663 A1

(12) EUROPÄISCHE PATENTANMELDUNG

(43) Veröffentlichungstag:
**25.10.2023 Patentblatt 2023/43**

(21) Anmeldenummer: **22169156.1**

(22) Anmeldetag: **21.04.2022**

(51) Internationale Patentklassifikation (IPC):
***C08G 18/10*** *(2006.01)* ***C08G 18/38*** *(2006.01)*
***C08G 18/48*** *(2006.01)* ***C08G 18/73*** *(2006.01)*
***C09D 175/06*** *(2006.01)*

(52) Gemeinsame Patentklassifikation (CPC):
(C-Sets verfügbar)
**C08G 18/73; C08G 18/10; C08G 18/3821; C08G 18/4825; C08G 18/4854; C09D 175/06**

(Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **SUETTERLIN, Jan**
  **51061 Köln (DE)**
- **WINTERMANTEL, Matthias**
  **50354 Hürth (DE)**
- **SCHUETTLER, Thomas**
  **51061 Köln (DE)**
- **ZORN, Anna-Marie**
  **76275 Ettlingen (DE)**
- **DIJKSTRA, Dirk**
  **50667 Köln (DE)**
- **STUEHLER, Karl Josef**
  **51061 Köln (DE)**
- **HEBESTREIT, Andreas**
  **51688 Wipperfürth (DE)**

(74) Vertreter: **Levpat**
**c/o Covestro AG**
**Gebäude K12**
**51365 Leverkusen (DE)**

# (54) POLYASPARTAT-BASIERTE ZWEIKOMPONENTEN-BESCHICHTUNGSZUSAMMENSETZUNGEN ZUR HERSTELLUNG VON BESCHICHTUNGEN MIT GUTEN SELBSTHEILUNGSEIGENSCHAFTEN BEI GLEICHZEITIG GERINGER KLEBRIGKEIT

(57) Die vorliegende Erfindung betrifft Zweikomponenten-Beschichtungszusammensetzungen enthaltend Polyasparaginsäureester und Polyetherpolyol-basierte Polyurethanprepolymere, wobei der Anteil an Polyolen, Polyetherpolyolen und Polyetherpolyaminen, sowie der Anteil an Komponenten mit einer Funktionalität > 2 in der Beschichtungszusammensetzung (ausgenommen Hilfs-, Zusatzstoffe und Lösemittel) in einem definierten Bereich liegen, ein Verfahren zur Herstellung dieser Zusammensetzungen, deren Einsatz zur Herstellung von Beschichtungen, sowie die Verwendung dieser Beschichtungen als Schutzbeschichtung, im Besonderen für Objekte, die (wiederholten) mechanischen Belastungen ausgesetzt sind.

EP 4 265 663 A1

(52) Gemeinsame Patentklassifikation (CPC): (Forts.)

C-Sets
**C08G 18/10, C08G 18/3821**

## Beschreibung

Die vorliegende Erfindung betrifft Zweikomponenten-Beschichtungszusammensetzungen enthaltend Polyasparaginsäureester und Polyetherpolyol-basierte Polyurethanprepolymere, wobei der Anteil an Polyolen, Polyetherpolyolen und Polyetherpolyaminen, sowie der Anteil an Komponenten mit einer Funktionalität > 2 in der Beschichtungszusammensetzung (ausgenommen Hilfs-, Zusatzstoffe und Lösemittel) in einem definierten Bereich liegen, ein Verfahren zur Herstellung dieser Zusammensetzungen, deren Einsatz zur Herstellung von Beschichtungen, sowie die Verwendung dieser Beschichtungen als Schutzbeschichtung, im Besonderen für Objekte, die (wiederholten) mechanischen Belastungen ausgesetzt sind.

Zweikomponenten (2K)-Beschichtungsmittel, die als Bindemittel eine Polyisocyanatkomponente in Kombination mit einer gegenüber Isocyanatgruppen reaktionsfähigen Reaktivkomponente, insbesondere einer Polyhydroxylkomponente enthalten, sind seit langem bekannt. Sie eignen sich zur Herstellung von hochwertigen Überzügen, die hart, elastisch, abrieb- und lösemittelbeständig und vor allem auch witterungsstabil eingestellt werden können.

Innerhalb dieser 2K-Polyurethan-Beschichtungstechnologie haben sich in letzter Zeit bestimmte, estergruppenhaltige, sekundäre Polyamine etabliert, die sich in Kombination mit Lackpolyisocyanaten insbesondere als Bindemittel in lösemittelarmen oder -freien (high solids) Beschichtungsmitteln eignen und eine rasche Aushärtung der Beschichtungen bei niedrigen Temperaturen ermöglichen. Bei diesen sekundären Polyaminen handelt es sich um die sogenannten Polyasparaginsäureester, wie sie beispielhaft in der EP0403921 beschrieben werden. Ihre Verwendung allein oder in einem Gemisch mit weiteren, gegenüber Isocyanatgruppen reaktionsfähigen Komponenten in 2K-Beschichtungsmitteln wird beispielsweise in der EP0403921, EP0639628, EP0667362, EP0689881, US5214086, EP0699696, EP0596360, EP0893458, DE19701835 und US5243012 beschrieben.

Oberflächen von Objekten, die wiederholten mechanischen Belastungen ausgesetzt sind profitieren von der Fähigkeit zur Selbstheilung. Ermüdungsschäden können so reduziert werden. Handelt es sich hierbei um Schlagbelastungen muss die Einschlagsenergie ohne Materialversagen aufgenommen werden. Das Material darf nicht spröde, sondern muss elastisch sein. Elastische Materialien zeichnen sich durch eine hohe Bruchdehnung aus. Gleichzeitig ist eine niedrige Glasübergangstemperatur hilfreich, damit die Materialien auch bei hohen Einschlagsgeschwindigkeiten nicht verspröden und elastisch bleiben (Zeit-Temperatur-Superpositionsprinzip).

Materialien mit Selbstheilungseigenschaften können den Nachteil der Klebrigkeit aufweisen. Insbesondere bei Beschichtungen ist dies nicht erwünscht, da Partikel aller Art (z.B. Staub oder Sand), an der Beschichtung haften bleiben. Dies kann Nachteile in den jeweiligen Anwendunge n zur Folge haben, z.B. höhere Luftwiderstände oder unerwünschte Haptik.

Besonders wünschenswert sind demnach Beschichtungen, die eine gute Selbstheilung aufweisen bei gleichzeitig niedriger Klebrigkeit.

Die vorliegenden Erfindung berichtet erstmalig von Selbstheilungseigenschaften von Beschichtungszusammensetzungen enthaltend Polyasparaginsäureester.

Die Aufgabe der vorliegenden Erfindung bestand in der Bereitstellung von Beschichtungen mit guten Selbstheilungsfahigkeiten bei gleichzeitig geringer Klebrigkeit. Als ausreichende Selbstheilungsfahigkeiten wird im Rahmen der vorliegenden Erfindung eine Bruchdehnung von > 40% nach 24 h Selbstheilung (d.h. Lagerung bei 23°C, 50% relative Luftfeuchtigkeit) definiert. Dass die Klebrigkeit (engl. "tack") mit abnehmenden Modul eines Materials steigt, ist bekannt (C. A. Dahlquist, "Adhesion - Fundamentals and Practice - A Report of an International Conference held atthe University of Nottingham, England 20-22 September 1966", Maclaren and Sonst Ltd, London). Ein Speichermodul bei 23°C und 1 Hz von > 0,7 MPa (bestimmt über dynamisch-mechanische Analyse) ist im Sinne der Erfindung eine geringe Klebrigkeit. Eine weitere Aufgabe der Erfindung war es Beschichtungen mit Bruchdehnung im unbeschädigten Zustand von > 100% und eine Glasübergangstemperatur (bestimmt über maximum Tangens delta bei 1 Hz) < 23°C breitzustellen.

Diese Aufgabe wurde durch die nachfolgend beschriebenen Zweikomponenten-Beschichtungszusammensetzungen, enthaltend Polyasparaginsäureester und Polyetherpolyol-basierte Polyurethanprepolymere gelöst, wobei der Anteil an Polyolen, Polyetherpolyolen und Polyetherpolyaminen, sowie der Anteil an Komponenten mit einer Funktionalität > 2 in der Beschichtungszusammensetzung (ausgenommen Hilfs-, Zusatzstoffe und Lösemittel) in einem definierten Bereich liegen.

WO 2004/033517 A1, WO 2020/016292 A1 und WO 2020/094689 A1 beschreiben Beschichtungszusammensetzungen auf Basis von Polyasparaginsäureestern und Polyetherpolyolbasierten Polyurethanprepolymeren. In der WO 2004/033517 A1, sowie der WO 2020/016292 A1 werden im Wesentlichen Propylenoxid- und/oder Ethylenoxid-basierte Polyetherpolyole eingesetzt, während WO 2020/094689 auch die Verwendung anderer Polyetherpolyole, wie beispielsweise von Trimethylenoxid-basierten Polyetherpolyolen beschreibt. Keines dieser Dokument offenbart jedoch Beschichtungszusammensetzung, bei denen sowohl der Anteil an Polyolen, Polyetherpolyolen und Polyetherpolyaminen, als auch der Anteil an Komponenten mit einer Funktionalität > 2 in den in Anspruch 1 definierten Bereichen liegen, noch weniger den durch diese Merkmalskombination zu erhaltenden Effekt.

WO 2020/260578 A1 offenbart im Beispielteil ebenfalls ein Aspartat-basiertes Beschichtungsmittel (Beschichtung 6), welches als Härter ein Polyether-basiertes Allophanat-Prepolymer enthält. Ungeachtet dessen, dass es sich bei dem Härter nicht um ein Urethan-Prepolymer handelt, ist der Anteil an Komponenten mit einer Funktionalität > 2 in der Beschichtungszusammensetzung deutlich zu hoch. Die Beschichtung hat keine ausreichenden Selbstheilungseigenschaften, wie aus Beispiel 35 des experimentellen Teils der vorliegenden Unterlagen ersichtlich ist.

Gegenstand der vorliegenden Erfindung sind zweikomponentige Beschichtungszusammensetzungen (2K-Beschichtungsmittel), enthaltend

a) mindestens eine Polyasparaginsäureester-haltige Komponente A, welche

einen oder mehrere Polyasparaginsäureester der allgemeinen Formel (I)

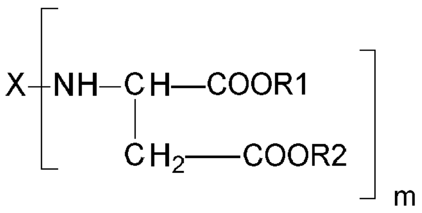

(I),

in welcher
m für eine ganze Zahl >1, bevorzugt für 2 steht,
X für einen m-wertigen, gegebenenfalls ein oder mehrere Heteroatome enthaltenden organischen Rest steht, wie er durch Entfernung der primären Aminogruppen aus einem (cyclo)aliphatisch bzw. araliphatisch gebundene primäre Aminogruppen aufweisenden Polyamin oder Polyetheramin des Molekulargewichtsbereichs 60 bis 6000 g/mol erhalten werden kann, und der weitere, gegenüber Isocyanatgruppen reaktive und/oder bei Temperaturen bis 100°C inerte funktionelle Gruppen enthalten kann, und
die Reste R1 und R2 für gleiche oder verschiedene organische Reste mit je 1 bis 18 Kohlenstoffatomen stehen,

und gegebenenfalls einen oder mehrere Polyasparaginsäureester der allgemeinen Formel (II)

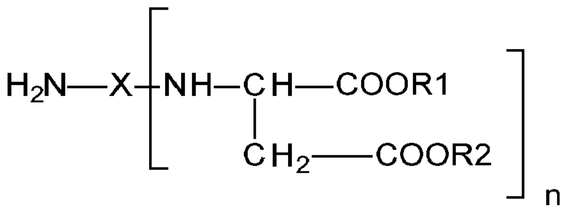

(II),

in welcher n für m-1 steht, und X und die Reste R1 und R2 die oben stehende Bedeutung haben,
enthält oder daraus besteht und erhältlich ist durch Umsetzung

a1) wenigstens eines Polyamins oder Polyetherpolyamins der allgemeinen Formel (III),

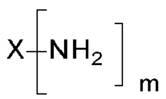

(III),

in welcher m und X die oben stehende Bedeutung haben,
mit
a2) wenigstens einer Verbindung der allgemeinen Formel (IV)

R1OOC-CH=CH-COOR2 (IV),

in welcher R1 und R2 die oben stehende Bedeutung haben,

b) mindestens ein NCO-funktionelles Polyurethan-Prepolymer (Komponente/n B), welches erhältlich ist durch Umsetzung

b1) wenigstens eines Polyisocyanats (Komponente/n B1) mit
b2) wenigstens einem Polyetherpolyol mit linearen Ethergruppen und/oder verzweigten Ethergruppen der folgenden allgemeinen Formeln (V) bis (VII):

$-O-(CH_2)_x-$ (V), wobei x = 2 bis 10, bevorzugt 2 bis 6, besonders bevorzugt 2 bis 4, $-O-CR^3R^4-CH_2-$ (VI), wobei $R^3$ und $R^4$ unabhängig voneinander sind und für Wasserstoff oder einen aliphatischen linearen oder verzweigten, gesättigten oder ungesättigten Rest mit bis zu 10 Kohlenstoffatomen, der auch Sauerstoffatome aufweisen kann, oder für einen aromatischen Rest mit bis zu 10 Kohlenstoffatomen stehen, wobei jedoch wenigstens einer der Reste $R^3$ oder $R^4$ kein Wasserstoff ist, und
$-O-CR^5R^6-CR^7R^8-$ (VII), wobei $R^5$ bis $R^8$ unabhängig voneinander sind und wobei $R^5$ und $R^7$ für Wasserstoff oder einen aliphatischen linearen oder verzweigten, gesättigten oder ungesättigten Rest mit bis zu 10 Kohlenstoffatomen, der auch Sauerstoffatome aufweisen kann, stehen und $R^6$ und $R^8$ für einen aliphatischen linearen oder verzweigten, gesättigten oder ungesättigten Rest mit bis zu 10 Kohlenstoffatomen, der auch Sauerstoffatome aufweisen kann, stehen oder $R^6$ und $R^8$ derart miteinander verknüpft sind, dass ein gesättigter oder ungesättigter Ring mit bis zu 8 Kohlenstoffatomen gebildet wird, der mit organischen Resten substituiert sein kann,
(Komponente/n B2),

b3) gegebenenfalls wenigstens einem, von B2 verschiedenen Polyol (Komponente/n B3),

c) gegebenenfalls eine oder mehrere, von A verschiedene, gegenüber Isocyanatgruppen reaktionsfähige Komponenten C,
d) gegebenenfalls eine oder mehrere, von B verschiedene Isocyanatkomponenten D, ausgewählt aus der Gruppe umfassend di) modifizierte Polyisocyanate, erhältlich aus der Umsetzung monomerer Polyisocyanate mit Polyolen, (Komponente/n D1) und dii) weitere, von di) verschiedene Isocyanatkomponenten (Komponente/n D2),
e) - gegebenenfalls Hilfs- und/oder Zusatzstoffe, ausgenommen solche der Komponenten E2 und E3, (Komponente/n E1)

- gegebenenfalls anorganische Füllstoffe und/oder anorganische Pigmente (Komponente/n E2) und/oder
- gegebenenfalls Lösungsmittel (Komponente/n E3),

wobei $G_x$ definiert wird als

die Gesamtmenge an

- in die Polyasparaginsäureester der Polyasparaginsäureester-haltigen Komponente A eingebauten Polyetherpolyamine der Formel III,
- in den Polyurethan-Prepolymeren B eingebauten Polyetherpolyolen B2 und PolyolenB3,
- Polyolen und Polyetherpolyaminen, die unter Komponente C fallen, und
- in den modifizierten Polyisocyanaten D1 eingebauten Polyolen,

bezogen auf das Gesamtgewicht der Komponenten A bis E1,
und $G_F$ definiert wird als
die Gesamtmenge der Komponenten A bis D, die eine Funktionalität > 2 aufweisen, bezogen auf 1 kg der Komponenten A bis E1,
wobei die Funktionalität die Isocyanatgruppen und Isocyanat-reaktiven Gruppen umfasst, und wobei gilt:

i) wenn Komponente B2 $\leq$ 100 bis $\geq$ 70 Gewichtsprozent lineare Ethergruppen und $\geq$ 0 bis $\leq$ 30 Gewichtsprozent verzweigte Ethergruppen, jeweils bezogen auf die Gesamtmenge an linearen und verzweigten Ethergruppen der Komponente B2, umfasst, so betragen $G_x \geq 35$ bis $\leq 72$ Gewichtsprozent und $G_F \geq 0$ bis < 0,09 Mol/kg, und
ii) wenn Komponente B2 $\geq$ 0 bis < 70 Gewichtsprozent lineare Ethergruppen und $\leq$ 100 bis > 30 Gewichtsprozent verzweigte Ethergruppen, jeweils bezogen auf die Gesamtmenge an linearen und verzweigten

Ethergruppen der Komponente B2, umfasst, und $ii_1$) $G_F \geq 0$ bis < 0,05 Mol/kg beträgt, so beträgt $G_X \geq 35$ bis < 50 Gewichtsprozent, oder $ii_2$) $G_F \geq 0{,}05$ bis < 0,09 Mol/kg beträgt, so beträgt $G_X \geq 35$ bis ≤ 65 Gewichtsprozent.

Bezüglich der oben angegebenen Ausführungsform i) gelten die folgenden Vorzugsbereiche: Bevorzugt beträgt Gx ≥ 35 bis ≤ 72Gewichtsprozent und $G_F \geq 0$ bis ≤ 0,08 Mol/kg, bevorzugt ≥ 0 bis ≤ 0,05 Mol/kg.

Besonders bevorzugt beträgt Gx ≥ 40 bis ≤ 68 Gewichtsprozent und $G_F \geq 0$ bis < 0,09 Mol/kg, bevorzugt ≥ 0 bis ≤ 0,08 Mol/kg, besonders bevorzugt ≥ 0 bis ≤ 0,05 Mol/kg.

Ganz besonders bevorzugt beträgt Gx ≥ 50 bis ≤ 65 Gewichtsprozent und $G_F \geq 0$ bis < 0,09 Mol/kg, bevorzugt ≥ 0 bis ≤ 0,08 Mol/kg, besonders bevorzugt ≥ 0 bis ≤ 0,05 Mol/kg.

Bezüglich der oben angegebenen Ausführungsform $ii_2$) gelten die folgenden Vorzugsbereiche: Bevorzugt beträgt $G_F \geq 0{,}05$ bis < 0,08 Mol/kg und Gx ≥ 35 bis ≤ 65 Gewichtsprozent.

Gegenstand der vorliegenden Erfindung sind auch zweikomponentige Beschichtungszusammensetzungen (2K-Beschichtungsmittel) bestehend aus den Komponenten A bis E.

Die Menge an in den Polyurethan-Prepolymeren B eingebauten Polyetherpolyolen B2 und Polyolen B3, bzw. in den modifizierten Polyisocyanaten D1 eingebauten Polyolen, ist jeweils wie folgt zu bestimmen:
Sofern es sich bei den Komponenten B bzw. D1 um monomerfreie linearen Verbindungen handelt, nach Flory (P. J. Flory, "Molecular Size Distribution in Linear Condensation Polymers", JACS 1936, pp. 1877-1885). Sofern es sich bei den Komponenten B bzw. D1 um monomerfreie verzweigte Verbindungen handelt mittels Simulation gemäß WO 2021/055398 A1. Die Bestimmung bei nicht monomerfreien Verbindungen erfolgt durch Berechnung aus der jeweiligen Rezeptur der Herstellvorschrift.

Die Menge an in die Polyasparaginsäureester der Polyasparaginsäureester-haltigen Komponente A eingebauten Polyetherpolyamine der Formel III wird aus der Rezeptur der Herstellvorschrift berechnet (Beispiel: PAE-D230 beschrieben in RSC Adv., 2018, 8, 13474, wird hergestellt aus 115 g Polyetheramin Jeffamine D230 und 172,18 g Diethylmaleat. Folglich enthält das Produkt 40% Polyetheramin.) Wenn Nebenkomponenten, zum Beispiel per Destillation, entfernt werden, wird dies ebenfalls berücksichtigt.

Polyasparaginsäureester-haltiae Komponente A

Bevorzugt enthalten Polyasparaginsäureester-haltige Komponenten A einen oder mehrere Polyasparaginsäureester der allgemeinen Formeln (I) und gegebenenfalls (II) bei denen R1 und R2 für gleiche oder verschiedene Alkylreste mit je 1 bis 18 Kohlenstoffatomen, bevorzugt gleiche oder verschiedene Alkylreste mit je 1 bis 8 Kohlenstoffatomen und ganz besonders bevorzugt für jeweils Alkylreste wie Methyl-, Ethyl-, Propyl-, iso-Propyl-, Butyl- oder iso-Butyl-Reste stehen. Am meisten bevorzugt ist Ethyl.

Polyasparaginsäureester-haltige Komponenten A enthalten einen oder mehrere Polyasparaginsäureester der allgemeinen Formeln (I) und gegebenenfalls (II), bei denen X für organische Reste steht, die durch Entfernung der primären Aminogruppen aus einem entsprechenden, (cyclo)aliphatisch bzw. araliphatisch gebundene primäre Aminogruppen aufweisenden Polyamin oder Polyetheramin erhalten werden, ausgewählt aus der folgenden Gruppe: alle bekannten Polyamine oder Polyetheramine mit primären Aminogruppen, die der allgemeinen Formel (III) entsprechen. Als Polyamine seien beispielhaft die folgenden Verbindungen genannt: Ethylendiamin, 1,2-Diaminopropan, 1,4-Diaminobutan, 1,5-Diaminopentan, 2,5-Diamino-2,5-dimethylhexan, 1,5-Diamino-2-methylpentan (Dytek®A, Fa DuPont), 1,6-Diaminohexan, 2,2,4- und/oder 2,4,4-Trimethyl-1,6-diaminohexan, 1,11-Diaminoundecan, 1,12-Diaminododecan oder Triaminononan, aliphatische polyzyklische Polyamine, wie Tricyclodecanbismethylamin (TCD-Diamin) oder Bis(aminomethyl)norbornane, amino-fünktionelle Siloxane, z.B. Diaminopropylsiloxan G10 DAS (Fa. Momentive), Fettalkylbasierte Amine, wie z.B. Fentamine der Fa. Solvay, Dimerfettsäurediamine wie z.B Priamine der Fa. Croda. Als Beispiele für Polyetherpolyamine seien genannt: 4,9-dioxadodecane-1,12-diamine, 4,7,10-trioxatridecane-1,13-diamine, sowie höhermolekulare Polyetherpolyamine mit aliphatisch gebundenen, primären Aminogruppen, wie sie beispielsweise unter der Bezeichnung Jeffamin® von der Firma Huntsman vertrieben werden.

Bevorzugt enthalten Polyasparaginsäureester-haltige Komponenten A einen oder mehrere Polyasparaginsäureester der allgemeinen Formeln (I) und gegebenenfalls (II) bei denen X für organische Reste steht, die durch Entfernung der primären Aminogruppen aus einem der Polyamine der allgemeinen Formel (III) erhalten wird, worin m = 2 bedeutet und X für einen cyclischen Kohlenwasserstoffrest mit mindestens einem cyclischen Kohlenstoffring steht. Beispiele für besonders bevorzugt einsetzbare Diamine sind 1-Amino-3,3,5-trimethyl-5-aminomethylcyclohexan (IPDA), 2,4- und/oder 2,6-Hexahydrotoluylendiamin (H6-TDA), Isopropyl-2,4-diaminocyclohexan, und/oder Isopropyl-2,6-diaminocyclohexan, 1,3-Bis-(aminomethyl)-cyclohexan, 2,4'-, und/oder 4,4'-Diamino-dicyclohexylmethan, 3,3'-Dimethyl-4,4'-diamino-dicyclohexylmethan (Laromin® C 260, Fa. BASF AG), die isomere, eine Methylgruppe als Kernsubstituenten aufweisende Diaminodicyclohexylmethane (=C-Monomethyl-diaminodicyclohexylmethane), 3(4)-Aminomethyl-1-methylcyclohexylamin (AMCA) sowie araliphatische Diamine, wie z.B. 1,3-Bis-(aminomethyl)-benzol oder m-Xylylendiamin.

Ebenfalls bevorzugt enthalten Polyasparaginsäureester-haltige Komponenten A einen oder mehrere Polyasparaginsäureester der allgemeinen Formeln (I) und gegebenenfalls (II) bei denen X für organische Reste steht, die durch Entfernung der primären Aminogruppen aus einem der Polyamine oder Polyetherpolyamine der allgemeinen Formel (III) erhalten wird, ausgewählt aus der Gruppe: Polyetherpolyamine mit aliphatisch gebundenen primären Aminogruppen, 1,2 Diaminopropan, 1,4-Diaminobutan, 1,6-Diaminohexan, 1,5-Diamino-2-methylpentan, 2,5 Diamino-2,5-dimethylhexan, 2,2,4- und/oder 2,4,4-Trimethyl-1,6-diaminohexan, 1,11-Diaminounodecan, 1,12-Diaminododecan, 1-Amino-3,3,5-trimehtyl-5-aminomethylcyclohexan, 2,4- und/oder 2,6-Hexahydrotoluylendiamin, 1,5-Diaminopentan, 2,4'- und/oder 4,4'-Diamino-dicyclohexylmethan oder 3,3'-Dimethyl-4,4'-diamino-dicyclohexylmethan. Besonders bevorzugt sind 3,3'-Dimethyl-4,4'-diamino-dicyclohexylmethan, 1,5-Diaminopentan, 2,4'- und/oder 4,4'-Diaminodicyclohexylmethan, 1,5-Diamino-2-methylpentan und ganz besonders bevorzugt ist die Verwendung von 2,4'- und/oder 4,4'-Diaminodicyclohexylmethan.

Besonders bevorzugt enthalten Polyasparaginsäureester-haltige Komponenten A einen oder mehrere Polyasparaginsäureester der allgemeinen Formeln (I) und gegebenenfalls (II), bei denen X für organische Reste steht, die durch Entfernung der primären Aminogruppen aus einem der Polyamine oder Polyetherpolyamine der allgemeinen Formel (III) erhalten wird, ausgewählt aus der Gruppe: Polyetherpolyamine mit aliphatisch gebundenen primären Aminogruppen, 1,2 Diaminopropan, 1,4-Diaminobutan, 1,5-Diaminopentan, 1,6-Diaminohexan, 1,5-Diamino-2-methylpentan, 2,5 Diamino-2,5-dimethylhexan, 2,2,4- und/oder 2,4,4-Trimethyl-1,6-diaminohexan, 1,11-Diaminounodecan, 1,12-Diaminododecan, 1-Amino-3,3,5-trimehtyl-5-aminomethylcyclohexan, 2,4- und/oder 2,6-Hexahydrotoluylendiamin, 2,4'- und/oder 4,4'-Diamino-dicyclohexylmethan oder 3,3'-Dimethyl-4,4' diamino-dicyclohexylmethan.

Ganz besonders bevorzugt enthalten Polyasparaginsäureester-haltige Komponenten A einen oder mehrere Polyasparaginsäureester der allgemeinen Formeln (I) und gegebenenfalls (II), bei denen X für organische Reste steht, die durch Entfernung der primären Aminogruppen aus einem der Polyamine der allgemeinen Formel (III) erhalten wird, ausgewählt aus der Gruppe: 3,3'-Dimethyl-4,4'diaminodicyclohexylmethan, 2,4'- und/oder 4,4'-Diaminodicyclohexylmethan, 1,5-Diamino-2-methylpentan.

Der Index m steht für eine ganze Zahl >1 und bevorzugt für 2.

Sofern die Polyasparaginsäureester-haltige Komponente A einen oder mehrere Polyasparaginsäureester der allgemeinen Formel (II) enthält, so ist dieser/ sind diese mit einem Anteil von > 0%, bevorzugt mindestens 0,1% (≥ 0,1%), besonders bevorzugt mindestens 1% (≥ 1%), ganz besonders bevorzugt mindestens 4% (≥ 4%), und bevorzugt von maximal 20% (≤ 20%), besonders bevorzugt maximal 15% (≤ 15%) der GC Oberfläche (gemessen als Flächen-% im Gas Chromatogram) enthalten, wobei die Summe der GC Oberflächen der Verbindungen der beiden allgemeinen Formeln (I) und (II) 100% beträgt. Die angegebenen Ober- und Untergrenzen sind beliebig kombinierbar. Es gelten alle möglichen Kombinationen als offenbart.

Bevorzugt enthalten Polyasparaginsäureester-haltige Komponenten A einen oder mehrere Polyasparaginsäureester der allgemeinen Formel (I) und gegebenenfalls Formel (II), wobei die Ester eine Platin-Cobalt-Farbzahl ≤ 200, besonders bevorzugt ≤ 100 aufweisen. Die Messung der Platin-Cobalt-Farbzahl erfolgt gemäß DIN EN ISO 6271:2016-05.

Die erfindungsgemäß zu verwendenden Polyasparaginsäureester-haltigen Komponenten A können durch das folgende Verfahren hergestellt werden:

Umsetzung von Polyaminen oder Polyetherpolyaminen der allgemeinen Formel (III),

$$X\left[NH_2\right]_m$$

(III),

wobei X
für einen m-wertigen, gegebenenfalls ein oder mehrere Heteroatome enthaltenden organischen Rest steht, wie er durch Entfernung der primären Aminogruppen aus einem (cyclo)aliphatisch bzw. araliphatisch gebundene primäre Aminogruppen aufweisenden Polyamin oder Polyetherpolyamin des Molekulargewichtsbereichs von ≥ 60 bis ≤ 6000 g/mol erhalten werden kann, und der weitere, gegenüber Isocyanatgruppen reaktive und/oder bei Temperaturen bis 100°C inerte funktionelle Gruppen enthalten kann, und
m für eine ganze Zahl > 1, bevorzugt für 2 steht,

mit Verbindungen der allgemeinen Formel (IV)

$R^1OOC-CH=CH-COOR^2$ (IV),

wobei R1 und R2

für gleiche oder verschiedene organische Reste, vorzugsweise für gleiche oder verschiedene Alkylreste mit je 1 bis 18 Kohlenstoffatomen, besonders bevorzugt für gleiche oder verschiedene Alkylreste mit je 1 bis 8 Kohlenstoffatomen, ganz besonders bevorzugt für jeweils Alkylreste wie Methyl-, Ethyl-, Propyl-, iso-Propyl-, Butyl- oder iso-Butyl-Reste und am meisten bevorzugt für Ethyl stehen,

und destillative Entfernung des überschüssigen Anteils an der Verbindung der allgemeinen Formel (IV).

Im ersten Schritt werden die Verbindungen der allgemeinen Formel (III) und (IV) bei Temperaturen zwischen 0°C und 100°C, vorzugsweise 20° bis 80°C und besonders bevorzugt 20° bis 60°C, in einem Verhältnis der Äquivalente der primären Aminogruppen der Verbindungen der allgemeinen Formel (III) zu den C=C-Doppelbindungsäquivalenten der Verbindungen der allgemeinen Formel (IV) von 1:1.2 bis 1.2:1, vorzugsweise jedoch 1:1.05 bis 1.05:1, besonders bevorzugt 1:1, bis zu einem Restgehalt an Verbindungen der allgemeinen Formel (IV) von 2 bis 15 Gew.-Prozent, bevorzugt von 3 bis 10 Gew.-Prozent umgesetzt.

Polyasparaginsäureester-haltige Komponenten A, die nur Polyasparaginsäureester der allgemeinen Formel (I) enthalten, nicht jedoch der Formel (II), bzw. die nahezu frei sind von Polyasparaginsäureestern der allgemeinen Formel (II), lassen sich analog herstellen, wobei jedoch mit einem Überschuss an Verbindungen der allgemeinen Formel (IV) gearbeitet wird, d.h. in einem Verhältnis der Äquivalente der primären Aminogruppen der Verbindungen der allgemeinen Formel (III) zu den C=C-Doppelbindungsäquivalenten der Verbindungen der allgemeinen Formel (IV) von 1:10, bevorzugt 1:5, besonders bevorzugt 1:2.

Der Umsetzung schließt sich ein Destillationsschritt an, bei der der überschüssige Verbindungen der allgemeinen Formel (IV) entfernt werden.

Geeignete Bedingungen während der Destillation sind ein Druckbereich zwischen 0.01 und 2 mbar und eine Temperatur des Sumpfablaufs beim Austritt aus der Destillationsapparatur ≤ 170°C und ≥ der Temperatur liegt, die sich aus der folgenden Formel (VIII) ergibt:

$$T(\text{Sumpfablauf}) = 27 \times \ln(p) + 150 \qquad \text{(VIII)}$$

wobei

| | |
|---|---|
| T(Sumpfablauf) | für die Temperatur des Sumpfablaufs in °C und |
| p | für den Druck in der Destillationsapparatur in mbar stehen. |

Durch Einhalten dieses Druckbereichs wird gewährleistet, dass einerseits moderate Temperaturen im Sumpfablauf ausreichen, um die Verbindungen der allgemeinen Formel (IV) im gewünschten Umfang abzureichern, andererseits das Verfahren im technischen Maßstab anwendbar bleibt. Bei geringerem Druck wird die Gasdichte zu gering und die erforderlichen Apparate deshalb so groß, dass das Verfahren aus wirtschaftlicher Sicht nachteilig wird.

Bevorzugt ist die Temperatur des Sumpfablaufs ≤ 170°C, dabei jedoch mindestens 20 K oberhalb der Temperatur, die sich aus der Formel (VIII) ergibt, besonders bevorzugt liegt sie zwischen 20 K und 40 K oberhalb der Temperatur, die sich aus der Formel (VIII) ergibt jedoch nicht oberhalb von 170°C.

Während der Herstellung von Polyasparaginsäureestern auf Basis von Maleinsäureestern als Verbindungen der Formel (IV) kann eine retro-Michael Addition als eine unerwünschte Nebenreaktion erfolgen, bei der durch Eliminierung des Polyamins als Nebenkomponente die entsprechenden Fumarsäuredialkylester gebildet werden. Diese wirken sensibilisierend. Sie zählen zu den Verbindungen der Formel (IV) und werden im Destillationsschritt entfernt bzw. ihr Gehalt wird durch die Destillation deutlich reduziert.

Sofern die Polyasparaginsäureester-haltige Komponente A Fumarsäuredialkylester enthält, so liegen diese in Mengen von > 0% bis ≤ 3 Gew.-%, bevorzugt ≥ 0,01 bis ≤ 1,5 Gew.-%, mehr bevorzugt ≥ 0,01 bis ≤ 1 Gew.-%, am meisten bevorzugt ≥ 0,01 bis ≤ 0,5 Gew.-%, bezogen auf das Gesamtgewicht der Komponente A, vor.

Bezüglich Beispielen und Vorzugsbereichen der Polyamine der allgemeinen Formel (III), die in dem oben beschriebenen Verfahren eingesetzt werden können, sei auf die vorangegangenen Ausführungen verwiesen.

Bevorzugte Verbindungen der allgemeinen Formel (IV), die in dem oben beschriebenen Verfahren Anwendung finden sind Malein- oder Fumarsäureester der allgemeinen Formel (IV), worin R1 und R2 für gleiche oder verschiedene organische Reste mit je 1 bis 18 Kohlenstoffatomen stehen. Bevorzugt stehen $R^1$ und $R^2$ unabhängig voneinander für lineare oder verzweigte Alkylreste mit 1 bis 8 Kohlenstoffatomen, besonders bevorzugt für jeweils Alkylreste wie Methyl-,

Ethyl-, Propyl-, iso-Propyl-, Butyl- oder iso-Butyl-Reste und ganz besonders bevorzugt für Ethyl. Beispielhaft für Verbindungen der allgemeinen Formel (IV) seien die folgenden Verbindungen genannt: Maleinsäuredimethylester, -diethylester, -di-n oder -iso-propylester, -di-n-butylester, -di-2-ethyl-hexylester oder die entsprechenden Fumarsäureester. Ganz besonders bevorzugt ist Maleinsäurediethylester.

Komponente B

Die erfindungsgemäßen zweikomponentigen Beschichtungszusammensetzungen enthalten als Komponente B mindestens ein NCO-fünktionelles Polyurethan-Prepolymer, welches erhältlich ist durch Umsetzung

b1) wenigstens eines Polyisocyanats (Komponente/n B1) mit
b2) wenigstens einem Polyetherpolyol (Komponente/n B2), und
b3) gegebenenfalls wenigstens einem, von B2 verschiedenen Polyol (Komponente/n B3).

Zur Herstellung der NCO-fünktionellen Polyurethan-Prepolymere geeignete Polyisocyanate B1 weisen eine Funktionalität bevorzugt ≥ 2 auf.

Geeignete Polyisocyanate B1 zur Herstellung der NCO-funktionellen Polyurethan-Prepolymere sind beispielsweise monomere Polyisocyanate. Dazu gehören beliebige monomere Diisocyanate, welche über Phosgenierung in der Flüssig- oder Gasphase oder auf phosgenfreiem Wege zugänglich sind. Bevorzugte Diisocyanate sind solche des Molekulargewichtsbereichs 140 bis 400 g/mol mit linearaliphatisch, cycloaliphatisch, araliphatisch und/oder aromatisch gebundenen Isocyanatgruppen, wie z. B. 1,4-Diisocyanatobutan, 1,5-Diisocyanatopentan (Pentamethylendiisocyanat, PDI), 1,6-Diisocyanatohexan (Hexamethylendiisocyanat, HDI), 2-Methyl-1,5-diisocyanatopentan, 1,5-Diisocyanato-2,2-dimethylpentan, 2,2,4-bzw. 2,4,4-Trimethyl-1,6-diisocyanatohexan, 1,10-Diisocyanatodecan, 1,3-und 1,4-Diisocyanatocyclohexan, 1,3-und 1,4-Bis-(isocyanatomethyl)cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis(isocyanatomethyl)benzol (Xylylendiisocyanat, XDI), 1,3-und 1,4-Bis-(2-isocyanato-prop-2-yl)-benzol (Tetramethylxylylendiisocyanat, TMXDI), 2,4- und 2,6-Diisocyanatotoluol (Toluylendiisocyanat, TDI), 2,4'- und 4,4'-Diisocyanatodiphenylmethan (MDI), 1,5-Diisocyanatonaphthalin oder Mischungen aus mindestens zwei solcher Diisocyanate. Als Beispiel für ein monomeres Polyisocyanat einer NCO-Funktionalität > 2 sei Triisocyanatononan (TIN) erwähnt.

Besonders bevorzugte Diisocyanate sind solche des Molekulargewichtsbereichs 140 bis 400 g/mol mit linearaliphatisch, cycloaliphatisch und/oder araliphatisch gebundenen Isocyanatgruppen, ganz besonders bevorzugt mit linearaliphatisch und/oder cycloaliphatisch gebundenen Isocyanatgruppen. darüberhinaus bevorzugt mit linearaliphatisch gebundenen Isocyanatgruppen, Am meisten bevorzugt sind PDI und/oder HDI .

Weitere geeignete Polyisocyanate B1 zur Herstellung der NCO-funktionellen Polyurethan-Prepolymere sind linearaliphatische, cycloaliphatische, araliphatische und aromatische Polyisocyanate einer NCO-Funktionalität ≥ 2 mit Uretdion-, Isocyanurat-, Allophanat-, Harnstoff-, Biuret-, Iminooxadiazindion- und/oder Oxadiazintrionstrukturen (Im Folgenden auch modifizierte Polyisocyanate genannt). Diese können aus monomeren Polyisocyanaten einer NCO-Funktionalität ≥ 2 der oben beschriebenen Art erhalten werden. Ihre Synthese ist beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 sowie in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 und JP 56059828 beispielhaft beschrieben sind.

Bei der Herstellung dieser modifizierten Polyisocyanate B1 schließt sich an die eigentliche Modifizierungsreaktion mit Uretdion-, Isocyanurat-, Allophanat-, Harnstoff-, Biuret-, Iminooxadiazindion- und/oder Oxadiazintrionstrukturen in der Regel ein weiterer Verfahrenschritt zur Abtrennung der nicht umgesetzten überschüssigen monomeren Isocyanate an. Diese Monomerenabtrennung erfolgt nach an sich bekannten Verfahren vorzugsweise durch Dünnschichtdestillation im Hochvakuum oder durch Extraktion mit geeigneten gegenüber Isocyanatgruppen inerten Lösemitteln, beispielsweise aliphatischen oder cycloaliphatischen Kohlenwasserstoffen wie Pentan, Hexan, Heptan, Cyclopentan oder Cyclohexan. Vorzugsweise weisen die so erhältlichen modifizierten Polyisocyanate einen Gehalt an monomeren Isocyanaten von weniger als 0,5 Gew.-%, besonders bevorzugt von weniger als 0,3 Gew.-% auf. Die RestMonomeren Gehalte werden nach DIN EN ISO 10283:2007-11 gaschromatographisch mit internem Standard gemessen.

Bevorzugte modifizierte Polyisocyanate B1 sind solche einer NCO-Funktionalität ≥ 2 mit Uretdion-, Isocyanurat-, Allophanat-, Harnstoff-, Biuret-, Iminooxadiazindion- und/oder Oxadiazintrionstrukturen mit ausschließlich linearaliphatisch und/oder cycloaliphatisch gebundenen Isocyanatgruppen. Besonders bevorzugt sind Polyisocyanate einer NCO-Funktionalität ≥ 2 mit Isocyanurat- und/oder Allophanatstruktur, die ausschließlich linearaliphatisch und/oder cycloaliphatisch gebundene Isocyanatgruppen aufweisen, bevorzugt solche auf Basis von PDI, HDI, IPDI und/oder 4,4'-Diisocyanatodicyclohexylmethan. Am meisten bevorzugt sind Polyisocyanate einer NCO-Funktionalität ≥ 2 mit Isocyanurat- und/oder Allophanatstruktur, die ausschließlich linearaliphatisch gebundene Isocyanatgruppen aufweisen, bevorzugt solche auf Basis von PDI, HDI.

Prinzipiell ist natürlich auch der Einsatz von Mischungen verschiedener Polyisocyanate der vorstehend genannten Art möglich.

Die zur Herstellung der NCO-funktionellen Polyurethan-Prepolymere geeigneten Polyetherpolyole B2 weisen bevorzugt zahlenmittlere Molekulargewichte Mn von > 200 bis ≤ 10000 g/mol, besonders bevorzugt von > 400 bis ≤ 2500 g/mol auf und eine mittlere Hydroxylfunktionalität von bevorzugt ≥ 1,8 bis ≤ 6, besonders bevorzugt ≥ 1,9 bis ≤ 2,1 g/mol, ganz besonders bevorzugt ≥ 1,9 bis ≤ 2 g/mol auf.

Geeignete Polyetherpolyole B2 weisen lineare Ethergruppen und/oder verzweigte Ethergruppen der folgenden allgemeinen Formeln (V) bis (VII) auf:

i) - O - $(CH_2)_x$- (V), wobei x für 2 bis 10, bevorzugt 2 bis 6, besonders bevorzugt 2 bis 4 steht.

ii) - O -$CR^3R^4$-$CH_2$- (VI), wobei $R^3$ und $R^4$ unabhängig voneinander sind und für Wasserstoff oder einen aliphatischen linearen oder verzweigten, gesättigten oder ungesättigten Rest mit bis zu 10 Kohlenstoffatomen, der auch Sauerstoffatome aufweisen kann, oder für einen aromatischen Rest mit bis zu 10 Kohlenstoffatomen stehen, wobei jedoch wenigstens einer der Reste $R^3$ oder $R^4$ kein Wasserstoff ist.

Bevorzugt sind $R^3$ und $R^4$ unabhängig voneinander und stehen für Wasserstoff oder einen aliphatischen linearen oder verzweigten, gesättigten oder ungesättigten Rest mit bis zu 10 Kohlenstoffatomen, wobei jedoch wenigstens einer der Reste $R^3$ oder $R^4$ kein Wasserstoff ist.

Besonders bevorzugt steht $R^3$ für Wasserstoff und $R^4$ für einen aliphatischen linearen oder verzweigten, gesättigten oder ungesättigten Rest mit bis zu 10 Kohlenstoffatomen, bevorzugt 6 Kohlenstoffatomen.

iii) - O -$CR^5R^6$-$CR^7R^8$- (VII), wobei $R^5$ bis $R^8$ unabhängig voneinander sind und wobei $R^5$ und $R^7$ für Wasserstoff oder einen aliphatischen linearen oder verzweigten, gesättigten oder ungesättigten Rest mit bis zu 10 Kohlenstoffatomen, der auch Sauerstoffatome aufweisen kann, stehen und $R^6$ und $R^8$ für einen aliphatischen linearen oder verzweigten, gesättigten oder ungesättigten Rest mit bis zu 10 Kohlenstoffatomen, der auch Sauerstoffatome aufweisen kann, stehen oder $R^6$ und $R^8$ derart miteinander verknüpft sind, dass ein gesättigter oder ungesättigter Ring mit bis zu 8 Kohlenstoffatomen gebildet wird, der mit organischen Resten substituiert sein kann.
Bevorzugt sind $R^5$ bis $R^8$ unabhängig voneinander und stehen $R^5$ und $R^7$ für Wasserstoff und $R^6$ und $R^8$ für einen aliphatischen linearen oder verzweigten, gesättigten oder ungesättigten Rest mit bis zu 10 Kohlenstoffatomen, bevorzugt 6 Kohlenstoffatomen.

Geeignete Polyetherpolyole B2 sind z.B. durch ringöffnende Polymerisation cyclischer Ether in Anwesenheit von hydroxyfunktionellen Verbindungen erhältlich.

Als hydroxyfunktionelle Verbindungen eignen sich dabei bevorzugt Wasser oder solche, die eine OH- Funktionalität von ≥ 2 bis ≤ 6 aufweisen, beispielsweise Propylenglykol, 1,3-Propandiol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol oder methylolgruppenhaltige Kondensate aus Formaldehyd und Phenol Diese können auch in Mischung verwendet werden. Bevorzugt sind die Polyole ausgewählt aus der Gruppe Propylenglykol, 1,3-Propandiol, Glycerin, Trimethylolpropan und Pentaerythrit.

Als cyclische Ether zur Herstellung der Polyetherpolyole B2 eignen sich beispielsweise folgende Verbindungen: Ethylenoxid, Propylenoxid, 1,2-Butylenoxid, 2,3-Butylenoxid, 2-Methyl-1,2-propylenoxid (Isobutylenoxid), 1,2-Pentylenoxid, 2,3-Pentylenoxid, 2-Methyl-1,2-butylenoxid, 3-Methyl-1,2-butylenoxid, 1,2-Hexylenoxid, 2,3-Hexylenoxid, 3,4-Hexylenoxid, 2-Methyl-1,2-pentylenoxid, 4-Methyl-1,2-pentylenoxid, 2-Ethyl-1,2-butylenoxid, 1,2-Heptylenoxid, 1,2-Octylenoxid, 1,2-Nonylenoxid, 1,2-Decylenoxid, 1,2-Undecylenoxid, 1,2-Dodecylenoxid, 4-Methyl-1,2-pentylenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, Derivate des Glycidols, wie beispielsweise Methylglycidylether, Ethylglycidylether, 2-Ethylhexylglycidylether, Allylglycidylether, Trimethylenoxid, Tetramethylenoxid (THF), Pentamethylenoxid, Hexamethylenoxid, Heptamethylenoxid, Decamethylenoxid. Es können auch mehrere dieser Ether copolymerisiert werden.

Bevorzugt basieren die Polyetherpolyole B2 auf Ethylenoxid, Propylenoxid und/oder Tetramethylenoxid (THF), besonders bevorzugt auf Propylenoxid und/oder Tetramethylenoxid (THF).

Die Synthese von Polyetherpoylolen der oben genannten Art ist beispielsweise in DE 26 22 951 B, Spalte 6, Zeile 65 bis Spalte 7, Zeile 26, der EP-A 0 978 523 Seite 4, Zeile 45 bis Seite 5, Zeile 14, der WO 2011/069966, Seite 4, Zeile 20 bis Seite 5, Zeile 23 detailliert beschrieben. Es sind Synthesen bekannt, bei denen die ringöffnende Polymerisation säurekatalysiert erfolgt, so z.B. für die Herstellung des Poly-THF. Detaillierte Ausführungen dazu finden sich z.B. in Angew. Chem. 72, 927 (1960).

Zur Herstellung der NCO-funktionellen Polyurethan-Prepolymere können weitere, von B2 verschiedene Polyole (B3) eingesetzt werden.

Dies können beispielsweise niedermolekulare Polyole des Molekulargewichtsbereichs von 62 bis 300 g/mol, beispielsweise Ethylenglykol, Propylenglykol, Trimethylolpropan, Glycerin oder Gemische dieser Alkohole, oder Polyhydroxyverbindungen eines über 300 g/mol, bevorzugt über 400 g/mol, besonders bevorzugt eines zwischen 400 und 20000 g/mol liegenden Molekulargewichts sein. Derartige Polyhydroxylverbindungen sind insbesondere solche, die pro Molekül 2 bis 6, bevorzugt 2 bis 3 Hydroxylgruppen aufweisen und aus der Gruppe, bestehend aus Polyester-, Polythioether-, Polyurethan-, Polycarbonat- und Polyacrylatpolyolen ausgewählt sind.

Zur Herstellung derNCO-funktionellen Polyurethan-Prepolymere werden das/die Polyisocyanate B1 und das/die Polyetherpolyol/e B2 und ggf. die Polyole B3 unter Einhaltung eines NCO/OH-Äquivalentverhältnisses von 1,5 : 1 bis 20 : 1 unter Urethanbildung umgesetzt. Die Umsetzung findet statt bei Temperaturen von 20 bis 200°C, vorzugsweise 40 bis 140°C, besonders bevorzugt 50 bis 120°C. Vorzugsweise wird bei Verwendung eines Überschusses an Polyisocyanat von mehr als 2 : 1 überschüssiges monomeres Polyisocyanat nach der Umsetzung durch in der Technik übliche destillative oder extraktive Verfahren (z. B. Dünnschichtdestillation) entfernt.

Die Umsetzung kann beschleunigt werden durch Verwendung eines die Urethanbildung beschleunigenden Katalysators. Gebräuchliche Katalysatoren sind beispielsweise Organozinnverbindungen, Bismuthverbindungen, Zinkverbindungen, Titanverbindungen, Zirkoniumverbindungen oder aminische Katalysatoren. Sofern ein oder mehrere Katalysatoren eingesetzt werden, werden vorzugsweise 0,001 bis 5 Gew. -%, insbesondere 0,002 bis 2 Gewichtsprozent Katalysator bzw. Katalysatorkombination, bezogen auf das Gesamtgewicht des Prepolymeransatzes, verwendet.

Die Umsetzung kann unter Verwendung eines Lösemittels oder Lösemittelsgemisches erfolgen. Gebräuchliche Lösemittel sind beispielweise solche, wie nachfolgend unter "Hilfs- und Zusatzstoffe (Komponenten E)" für die Herstellung der erfindungsgemäßen zweikomponentigen Beschichtungszusammensetzung beschrieben. An dieser Stelle sei auf die dortige Auflistung verwiesen.

Der Anteil an Polyetherpolyolen B2 beträgt mindestens 30 Gewichtsprozent, bevorzugt mindestens 40 Gewichtsprozent, besonders bevorzugt mindestens 60 Gewichtsprozent, bezogen auf das Gesamtgewicht der Komponente B.

Bevorzugt weisen die Polyurethan-Prepolymere eine mittlere NCO-Funktionalität von $\geq$ 1,8, bevorzugt von $\geq$ 2 bis $\leq$ 2,3 auf.

Komponenten C

Neben der Polyasparaginsäureester-haltigen Komponente A kann die erfindungsgemäße zweikomponentige Zusammensetzung weitere gegenüber Isocyanatgruppen reaktionsfähige Komponenten (Komponenten C) enthalten.

Dies können beispielsweise niedermolekulare Polyole des Molekulargewichtsbereichs von 62 bis 300 g/mol, beispielsweise Ethylenglykol, Propylenglykol, Trimethylolpropan oder Glycerin sein.

Es können auch Polyole eines über 300 g/mol, bevorzugt über 400 g/mol, besonders bevorzugt eines zwischen 400 und 20000 g/mol liegenden Molekulargewichts sein. Derartige Polyole sind insbesondere solche, die pro Molekül 2 bis 6, bevorzugt 2 bis 3 Hydroxylgruppen aufweisen und aus der Gruppe, bestehend aus Polyester-, Polyether-, Polythioether-, Polyurethan-, Polycarbonat- und Polyacrylatpolyolen ausgewählt sind.

Als gegenüber Isocyanatgruppen reaktionsfähige Verbindungen kommen beispielsweise auch Polyamine oder Polyetherpolyamine in Frage. Als Polyamine eignen sich insbesondere solche, die mindestens zwei primäre Aminogruppen pro Molekül und gegebenenfalls noch sekundäre Aminogruppen aufweisen und vorzugsweise ein mittleres Molekulargewicht von 60 bis 500 besitzen. Geeignet sind beispielsweise Ethylendiamin, 1,2- und 1,3-Diaminopropan, 1,4-Diaminobutan, 2,2,4- und/oder 2,4,4-Trimethylhexamethylendiamin, die isomeren Xylolendiamine, 1,4-Diaminocyclohexan, 4,4'-Diaminodicyclohexylmethan, 1,3-Diaminocyclopentan, 4,4'-Diaminodicyclohexylsulfon, 4,4'-Diaminodicyclohexylpropan-1,3, 4,4'-Diaminodicyclohexylpropan-2,2, 3,3'-Dimethyl-4,4' -diaminodicyclohexylmethan, 3 -Aminomethyl-3,3,5 -trimethylcyclohexylamin (Isophorondiamin), 3(4)-Aminomethyl-1-methylcycloliexylamin, technisches Bisaminomethyltricyclodecan, Octahydro-4.7-methanoinden-1.5-dimethanamin oder auch solche Polyamine, die neben mindestens zwei primären Aminogruppen noch sekundäre Aminogruppen aufweisen wie beispielsweise Diethylentriamin oder Triethylentetramin. Als Polyetherpolyamine eignen sich insbesondere Polyetherpolyamine mit aliphatisch gebundenen primären Aminogruppen, wie sie beispielsweise von Huntsman unter dem Handelsnamen Jeffamin® vertrieben werden.

Isocyanatkomponenten D

Als (von B verschiedene) Isocyanatkomponenten D eignen sich z.B. monomere Polyisocyanate (Komponente

D2). Bezüglich der Beschreibung geeigneter monomerer Polyisocyanate sei auf die Ausführungen zu den monomeren Polyisocyanaten unter Komponente B1 verwiesen. Diese, einschließlich der dort genannten Vorzugsbereiche, gelten hier analog.

Weiterhin geeignet Isocyanatkomponenten D sind modifizierte Polyisocyanate, d.h. linearaliphatische, cycloaliphatische, araliphatische und aromatische Polyisocyanate einer NCO-Funktionalität ≥ 2 mit Uretdion-, Isocyanurat-, Urethan-, Allophanat-, Harnstoff-, Biuret-, Iminooxadiazindion- und/oder Oxadiazintrionstrukturen. Diese können aus monomeren Polyisocyanaten einer NCO-Funktionalität ≥ 2 der oben beschriebenen Art erhalten werden. Mit Urethan- und/oder Allophanatstrukturen modifizierte Polyisocyanate basieren auf der Umsetzung der monomeren Polyisocyanate bevorzugt mit Polyester-, Polythioether-, Polyurethan-, Polycarbonat- und/oder Polyacrylatpolyolen und zählen zur Komponente D1). Modifizierte Polyisocyanate, die keine Urethan- und/oder Allophanatstrukturen aufweisen, zählen zur Komponente D2).

Bezüglich der Synthese und Aufarbeitung der modifizierten Polyisocynate sei auf die Ausführungen unter Komponente B1 verwiesen. Diese gelten hier analog.

Bevorzugte modifizierte Polyisocyanate B1 sind solche einer NCO-Funktionalität ≥ 2 mit Uretdion-, Isocyanurat-, Urethan-, Allophanat-, Harnstoff-, Biuret-, Iminooxadiazindion- und/oder Oxadiazintrionstrukturen mit ausschließlich linearaliphatisch und/oder cycloaliphatisch gebundenen Isocyanatgruppen. Besonders bevorzugt sind Polyisocyanate einer NCO-Funktionalität ≥ 2 mit Isocyanurat-, Urethan- und/oder Allophanatstruktur, die ausschließlich linearaliphatisch und/oder cycloaliphatisch gebundene Isocyanatgruppen aufweisen, bevorzugt solche auf Basis von PDI, HDI, IPDI und/oder 4,4'-Diisocyanatodicyclohexylmethan. Am meisten bevorzugt sind Polyisocyanate einer NCO-Funktionalität ≥ 2 mit Isocyanurat-, Urethan- und/oder Allophanatstruktur, die ausschließlich linearaliphatisch gebundene Isocyanatgruppen aufweisen, bevorzugt solche auf Basis von PDI, HDI.

Komponenten E1 und E2

Zu E1 zählen beispielsweise organische Pigmente, Füllstoffe oder Fasern, wie beispielsweise Indigo, PTFE-Partikel oder Kevlar-Fasern. Anorganische Pigmente und Füllstoffe, wie beispielsweise Titandioxid, Zinkoxid, Eisenoxide, Chromoxide, Russe, Schwerspat, Kreide, Wollastonit oder Talcum, werden von Komponente E2 umfasst. Eine ausführliche Übersicht über Pigmente und Füllstoffe für Beschichtungen gibt das "Lehrbuch der Lacke und Beschichtungen, Band II, Pigmente, Füllstoffe, Farbstoffe", H. Kittel, Verlag W.A. Colomb in der Heenemann GmbH, Berlin-Oberschwandorf, 1974, S. 17-265.

Zu den Hilfs- und Zusatzstoffen E1 gehören auch Katalysatoren/Aktivatoren wie zum Beispiel Titan-, Zirkonium-, Bismut-, Zinn- und/oder eisenhaltigen Katalysatore, wie sie beispielsweise in WO 05058996 beschrieben sind. Möglich ist auch eine Zugabe von Aminen oder Amidinen.

Beispiele weiterer geeigneter Hilfs- und Zusatzstoffe E1 sind Lackadditive, wie Lichtschutzmittel wie UV-Absorber und sterisch gehinderte Amine (HALS), weiterhin Stabilisatoren, Entschäumungs-, Antikrater- und/oder Netzmittel, Verlaufsmittel, filmbildende Hilfsmittel, Reaktivverdünner, Biozide, Lösemittel oder Substanzen zur Rheologiesteuerung. Der Einsatz von Lichtschutzmitteln insbesondere von UV-Absorber wie beispielsweise substituierten Benztriazolen, S-Phenyltriazinen oder Oxalaniliden sowie sterisch gehinderten Aminen insbesondere mit 2,2,6,6-Tetramethyl-piperidyl-Strukturen - als HALS bezeichnet - ist beispielhaft beschrieben in A. Valet, Lichtschutzmittel für Lacke, Vincentz Verlag, Hannover, 1996.

Stabilisatoren wie beispielsweise Radikalfänger und andere Polymerisationsinhibitoren wie sterisch gehinderte Phenole stabilisieren Lackkomponenten während der Lagerung und sollen Verfärbungen während der Aushärtung verhindern. Netz- und Verlaufsmittel verbessern die Oberflächenbenetzung und/oder den Verlauf von Lacken. Beispiele sind Fluortenside, Silikontenside sowie spezielle Polyacrylate. Rheologiesteuernde Additive sind wichtig um die Eigenschaften des ZweiKomponenten-Systems bei der Applikation und in der Verlaufsphase auf dem Substrat zu steuern und sind beispielsweise aus den Patentschriften WO 9422968, EP0276501, EP0249201 oder WO 9712945 bekannt. Weiterhin können Wasserfänger, wie z.B. Triethylorthoformiat, Toluolsulfoisocyanat, Monooxazolidine oder Molekularsiebe, und Hydrolyseschutzmittel, wie z.B. Carbodiimide, eingesetzt werden. Eine ausführliche Übersicht über Lackadditive findet sich in dem "Lehrbuch der Lacke und Beschichtungen, Band III, Lösemittel, Weichmacher, Additive, Zwischenprodukte", H. Kittel, Verlag W.A. Colomb in der Heenemann GmbH, Berlin-Oberschwandorf, 1976, S. 237-398.

Lösungsmittel (Komponenten E3)

Das Lösungsmittel kann ein organisches Lösungsmittel oder ein Gemisch organischer Lösungsmittel sein. Geeignete Lösungsmittel sind in dem Fachmann bekannter Art und Weise abgestimmt auf die Zusammensetzung sowie das Applikationsverfahren einzusetzen. Lösemittel sollen die eingesetzten Komponenten lösen und deren Vermischung fördern sowie Unverträglichkeiten vermeiden. Weiterhin sollen sie während der Applikation und der Härtung die Beschichtung auf die ablaufende Vernetzungsreaktion abgestimmt verlassen, so dass eine lösemittelfreie Beschichtung

mit möglichst guter Optik und ohne Fehlstellen wie Kocher oder Nadelstiche entsteht. Insbesondere kommen Lösemittel in Betracht, die in der Zwei Komponenten Technologie zur Anwendung kommen. Beispiele für organische Lösungsmittel sind Ketone wie Aceton, Methylethylketon oder Hexanon, Ester wie Ethylacetat, Butylacetat, Methoxyproylacetat, substituierte Glykole und andere Ether, Aromaten wie Xylol oder Solventnaphtha wie z.B. der Fa. Exxon-Chemie sowie Gemische der genannten Lösemittel. Liegt der NCO-reaktive Teil der Zusammensetzung als wässrige Dispersion vor, eignet sich auch Wasser als Löse- bzw. Verdünnungsmittel.

Vorzugsweise beträgt das Verhältnis der Stoffmengen der Isocyanatgruppen aus B und D und der NCO-reaktiven Gruppen aus A und C im Beschichtungsmittel von 0,5 zu 1,0 bis 3,0 zu 1,0. Besonders bevorzugt ist ein Verhältnis von 0,9 zu 1,0 bis 1,5 zu 1,0. Ganz besonders bevorzugt ist ein Verhältnis von 0,99 zu 1,0 bis 1,2 zu 1,0.

Sofern von A verschiedene, gegenüber Isocyanatgruppen reaktionsfähige Komponenten C im Beschichtungsmittel enthalten sind, beträgt ihr Anteil maximal 75 Gewichtsprozent, bevorzugt maximal 50 Gewichtsprozent, bezogen auf das Gesamtgewicht der Komponenten A bis E2.

Sofern von B verschiedene, Isocyanatkomponenten D im Beschichtungsmittel enthalten sind, beträgt ihr Anteil maximal 50 Gewichtsprozent, bevorzugt maximal 30 Gewichtsprozent, bezogen auf das Gesamtgewicht der Komponenten A bis E2.

Sofern Hilfs- und/oder Zusatzstoffe (Komponenten E1) und/oder anorganische Füllstoffe und/oder anorganische Pigmente (Komponenten E2) im Beschichtungsmittel enthalten sind, beträgt ihr Anteil maximal 60 Gewichtsprozent, bevorzugt maximal 25 Gewichtsprozent, besonders bevorzugt maximal 10 Gewichtsprozent, bezogen auf das Gesamtgewicht der Komponenten A bis E2.

Sofern Lösungsmittel (Komponenten E3) im Beschichtungsmittel enthalten sind, beträgt ihr Anteil maximal 50 Gewichtsprozent, bevorzugt maximal 25 Gewichtsprozent, bezogen auf das Gesamtgewicht der Komponenten A bis E3.

Die erfindungsgemäßen zweikomponentigen Zusammensetzungen sind vorzugsweise keine aufschäumbaren oder schaumbildenden Zusammensetzungen. Die Zusammensetzungen sind vorzugsweise nicht radikalisch polymerisierbar, insbesondere nicht photo-polymerisierbar, d.h. die Zusammensetzungen härten nicht durch radikalische Prozesse aus, insbesondere nicht durch radikalische Polymerisationsprozesse die durch aktinische Strahlung initiiert werden.

Die Herstellung der erfindungsgemäßen zweikomponentigen Beschichtungszusammensetzungen erfolgt nach in der Technologie der Lacke an sich bekannten Methoden.

Eine isocyanatreaktive (R) und eine isocyanathaltige Komponente (H) werden zunächst getrennt durch Vermischen der jeweiligen isocyanatreaktiven Komponenten A und C, bzw. durch Vermischen der jeweiligen Polyisocyanatkomponenten B und D hergestellt. Die Hilfs- und Zusatzstoffe E werden bevorzugt der isocyanatreaktiven Komponente R beigemischt. Ein Vermischen der so hergestellten Komponenten R und H erfolgt erst unmittelbar vor oder während der Applikation. Erfolgt das Vermischen vor der Applikation ist zu beachten, dass die Reaktion der Bestandteile nach dem Vermischen bereits startet. Je nach Auswahl der Komponenten und der Zusatzstoffe wird die Reaktion unterschiedlich schnell ablaufen. Die Verarbeitungszeit innerhalb derer die Zusammensetzung appliziert werden muss, auch als Topfzeit bezeichnet und definiert als die Zeit von der Vermischung der Komponenten bis zur Verdoppelung der Auslaufzeit, liegt dann je nach Auswahl der Komponenten im Bereich von 1 Minute bis zu 24 Stunden, meist im Bereich von 10 Minuten bis 8 Stunden. Die Bestimmung der Topfzeit erfolgt nach dem Fachmann bekannten Methoden.

Die Erfindung betrifft auch ein Verfahren zum Herstellen einer Beschichtung auf einem Substrat, welches mindestens folgende Schritte umfasst:

i) Aufbringen einer vorstehend beschriebenen zweikomponentigen Beschichtungszusammensetzung auf mindestens einen Teil eines zu beschichtenden Substrats, und
ii) Härten der Beschichtungszusammensetzung aus Schritt i).

Die Substrate können bereits mit einer oder mehreren Lackschichten ganz oder teilweise beschichtet sein. Diese Lackschichten können noch ungehärtet oder feucht, teilgehärtet oder vollständig gehärtet sein, vorzugsweise sind die weiteren Lackschichten auf dem Substrat teilgehärtet oder vollständig gehärtet. Beispiele für Lackschichten sind Grundierungen, Primer, Füller, Spachtel, Basislacke oder bereits vollständig lackierte Substrate, die nach einer eventuellen Vorbehandlung wie Anschleifen oder Plasmaaktivierung erneut überschichtet werden.

Die zweikomponentigen Beschichtungszusammensetzungen dienen insbesondere zur Herstellung von Schutzbeschichtungen, im Besonderen für Objekte, die (wiederholten) mechanischen Belastungen ausgesetzt sind, beispielsweise für Rotorblätter von Windkraftanlagen oder Hubschraubern, für Flugzeugflügel und Schiffsschrauben. Dabei kann die gesamte Oberfläche eines solchen Bauteils beschichtet sein. Es können auch nur Oberflächenareale des Bauteils, wie z.B. die Vorderkante (Leading Edge) eines Rotorblatts, eines Flugzeugflügels oder einer Schiffsschraube beschichtet sein.

Weitere, bevorzugte Gegenstände der vorliegenden Erfindung sind daher die Verwendung der vorstehend beschriebenen zweikomponentigen Beschichtungszusammensetzungen zur Herstellung von Beschichtungen auf Substraten, das oben beschriebene Verfahren zum Beschichten von Substraten mit diesen Beschichtungen, sowie die so erhältlichen beschichteten Substrate selbst.

Die Beschichtungszusammensetzung kann durch herkömmliche Auftragungsverfahren aufgetragen werden. Beispiele für Auftragsverfahren sind Pinseln und Rollen, Walzenauftrag, Rakeln, Tauchen und Sprühen. Nach einer optionalen Ablüftzeit schließt sich die Aushärtung bzw. die Trocknung der erfindungsgemäßen Zusammensetzung auf dem Substrat bzw. Objekt an. Diese erfolgt nach den in der Beschichtungstechnologie üblichen Methoden entweder unter Umgebungsbedingungen bezüglich Temperatur und Luftfeuchte oder unter forcierten Bedingungen beispielsweise durch Temperaturerhöhung in Öfen, Einsatz von Strahlung wie beispielsweise Infrarot- oder Nahinfrarot- oder Mikrowellenstrahlung, sowie Einsatz von entfeuchteter und/oder erwärmter Luft oder anderen Gasen. Bevorzugt ist dabei, auf den Einsatz von Geräten zur forcierten Aushärtung zu verzichten. Die aufgetragene Beschichtungszusammensetzung wird zum Beispiel bei Temperaturen von -20 bis 100°C, vorzugsweise von -10 bis 80°C, bevorzugter von 0 bis 60°C und am meisten bevorzugt von 10 bis 40°C ausgehärtet. Auch wenn nicht bevorzugt, geringere Härtungstemperaturen können ebenfalls verwendet werden, werden jedoch zu längeren Härtungszeiten führen.

Es ist ebenfalls möglich, auch wenn nicht bevorzugt, die Zusammensetzung bei höheren Temperaturen, beispielsweise 80 bis 160°C oder höher, auszuhärten.

Nach dem Aushärten der ersten Überzugsschicht kann eine weitere Überzugsschicht aufgebracht werden und ebenfalls ausgehärtet.

Die erfindungsgemäßen Beschichtungszusammensetzung führen zu Beschichtungen, die sich durch folgende Merkmale auszeichnen:

- eine Bruchdehnung > 40 % nach 24 h Selbstheilung (d.h. Lagerung bei 23°C, 50% relative Luftfeuchtigkeit), bevorzugt > 60%, besonders bevorzugt > 90%,
- eine Bruchdehnung im unbeschädigten Zustand (vor Selbstheilungstest) > 100%, bevorzugt > 300%, besonders bevorzugt > 500% und
- eine Glasübergangstemperatur (bestimmt über Maximum Tangens delta bei 1 Hz) < 23°C, bevorzugt < 0 °C, besonders bevorzugt < -10°C; sofern eine Beschichtung mehrere Glasübergangstemperaturen aufweist, muss wenigstens eine davon diese Bedingung erfüllen.
- ein Speichermodul bei 23°C und 1 Hz > 0,7 MPa, bevorzugt > 0,8 MPa.

## Experimenteller Teil

### Methoden

Sofern nicht abweichend gekennzeichnet, beziehen sich alle Prozentangaben auf das Gewicht.

Soweit nicht anders angegeben erfolgte die Bestimmung der Viskosität bei einer Temperatur von 23 °C und einer Scherrate von 50/s nach DIN 53019 durchgeführt.

Die NCO-Gehalte wurden volumetrisch gemäß DIN-EN ISO 11909 bestimmt.

Der Rest-Diisocyanatgehalt bzw. Restmonomergehalt wurde gemäß DIN EN ISO 10283 bestimmt.

Bruchspannung und Bruchdehnung wurden gemäß DIN 53504:2017-03 ermittelt. Die Probekörper wurden zuvor 24 h bei 23 °C und 50% relativer Luftfeuchte gelagert. Zur Überprüfung der Selbstheilung wurden die Zugstäbe auf eine plane Unterlage gelegt und mittig, quer zur Zugrichtung mit einer Rasierklinge (Martor, Solingen) durchgeschnitten. Anschließend wurden die Schnittflächen wieder mit leichtem Handdruck für 3 s zusammengefügt. Anschließend wurden die Probekörper für 24 h bei 23 °C und 50% relativer Luftfeuchte gelagert und Bruchspannung und Bruchdehnung erneut gemäß DIN 53504:2017-03 ermittelt.

Dynamisch-mechanische Analyse wurde an einer Mettler DMA SDTA 861 im Schermodus durchgeführt. Zwei Zylinder mit einem Durchmesser von 6 mm wurden in einen Doppelscherungsprobehalter eingesetzt. Die maximale Kraftamplitude betrug 0,5 N und die maximale Dehnung 2 $\mu$m. Die Messungen wurden im Temperaturbereich von -100 °C bis +150 °C durchgeführt mit einer Heizrate von 1 K/min und Testfrequenzen von 1, 10, 100 und 500 Hz.

Die Berechnung der Polyetherpolyolgehalte der monomerfreien linearen Präpolymere 1-10 erfolgte nach Flory (P. J. Flory, "Molecular Size Distribution in Linear Condensation Polymers", JACS 1936, pp. 1877-1885). Die Berechnung der Polyetherpolyolgehalte nicht destillierter Präpolymere (Präpolymer 11) erfolgt einfach über die jeweilige Rezeptur. Die Berechnung der Polyetherpolyolgehalte von monomerfreien verzweigten Präpolymeren (z.B. Desmodur E30600) erfolgte mittels Simulation gemäß WO 2021/055398 A1.

Die Berechnung von $G_x$ erfolgt auf Basis der Präpolymeranteile und den zuvor ermitteln Polyetherpolyolgehalten der Präpolymere. Enthält die Aspartat-Komponente A oder Komponente C oder D Polyether, werden diese ebenfalls berücksichtigt.

Die Fähigkeit einer Beschichtungszusammensetzung engmaschige Netzwerke auszubilden wird durch $G_F$ beschrieben.

**Berechnungsbeispiel für $G_x$ anhand Beschichtungsmasse 16**

Gemäß Tabelle 1 enthält Beschichtungsmasse 16 63,42 g Präpolymer 7, 13,02 g Desmodur N 3600 und 43,55 g Desmophen NH 1420. Die Gesamtmasse beträgt 119,99 g.

Die Rezeptur von Präpolymer 7 enthält 1680 g HDI und 1000 g des Polyethers Desmophen 1110 BD. Damit beträgt der Polyethergehalt des Präpolymers vor Destillation 37,3%. Gemäß Schulz-Flory-Verteilung sind 50,8% des Gemisches nicht umgesetztes monomeres HDI. Nach destillativer Entfernung des überschüssigen monomeren HDI erhöht sich der Polyethergehalt auf 75,8%.

75,8% von 63,42 g Präpolymer 7 entsprechen 48,07 g Polyether. Da Desmodur N 3600 und Desmophen NH 1420 keine Polyether enthalten, beträgt der prozentuale Anteil an Polyether bezogen auf die Gesamtmasse der Komponenten A-D 100 x 48,07/119,99 = 40%. $G_x$ beträgt somit 40%.

**Berechnungsbeispiel für $G_F$ anhand Beschichtungsmasse 16**

Gemäß Tabelle 1 enthält Beschichtungsmasse 16 63,42 g Präpolymer 7, 13,02 g Desmodur N 3600 und 43,55 g Desmophen NH 1420. Die Gesamtmasse beträgt 119,99 g.

Präpolymer 7 und Desmophen NH 1420 besitzen eine Funktionalität von 2. Desmodur N 3600 besitzt eine Funktionalität > 2 und ein zahlenmittleres Molekulargewicht Mn von 710 g/mol. 13,02 g Desmodur N 3600 entsprechend demnach einer Stoffmenge von 0,018 mol auf 119,99 g. Bezogen auf 1 kg der Komponenten A-D sind dies 0,15 mol. $G_F$ beträgt somit 0,15 mol/kg.

**Verwendete Substanzen und Abkürzungen**

HDI: Hexamethylendiisocyanat (Desmodur® H, Covestro Deutschland AG) Poly(tetrahydrofuran): Produkte mit zahlenmittleren Molmassen von 250, 1000, 1400 und 2000 g/mol wurden von BASF bezogen. Poly(tetrahydrofuran) mit einer zahlenmittleren Molmassen von 650 g/mol wurde von Merck bereitgestellt.

Desmodur® N 3600: Produkt von Covestro Deutschland AG, Isocyanurattrimerisat von HDI, Funktionalität > 2, NCO-Gehalt 23%,mittlere Molmasse von 710 g/mol (bestimmt durch GPC). Desmodur® E30600: Produkt von Covestro Deutschland AG, HDI-Prepolymer auf Polypropylenglycol-Basis mit einer Funktionalität > 2, einem Polyolgehalt von 75,6% und einer mittleren Molmasse von 2755 g/mol (bestimmt durch GPC).

Desmophen® 1262 BD: Produkt von Covestro Deutschland AG, difunktionelles Polypropylenglycol mit einer mittleren molaren Masse von 431,5 g/mol (OH-Zahl 260 mgKOH/g)

Desmophen® 1110 BD: Produkt von Covestro Deutschland AG, difunktionelles Polypropylenglycol mit einer mittleren molaren Masse von 1000 g/mol (OH-Zahl 112 mgKOH/g)

Desmophen® 2060 BD: Produkt von Covestro Deutschland AG, difunktionelles Polypropylenglycol mit einer mittleren molaren Masse von 2000 g/mol (OH-Zahl 56 mgKOH/g)

Ecoprol® 1000H: Produkt von SK Chemicals, difunktionelles Poly(1,3-propandiol) mit einer mittleren molaren Masse von 1000 g/mol (OH-Zahl 112 mgKOH/g)

Desmophen® NH 1420: Produkt von Covestro Deutschland AG, difunktionelles Amin mit einem Äquivalentgewicht von 276 g/mol, enthält keine Polyethergruppen.

Präpolymer 1

Es wurden 1680 g HDI vorgelegt, auf 80 °C erhitzt und unter Rühren über 60 min 250 g Poly(tetrahydrofuran) mit einer mittleren Molmasse von 250 g/mol (OH-Zahl 450 mgKOH/g) zugetropft. Es wurde 120 min bei 80 °C nachgerührt bis ein NCO-Gehalt von 38,6% erreicht wurde. Das überschüssige HDI wurde im zweistufigen Kurzwegverdampfer (Vorverdampfer 130 °C, Hauptverdampfer 120 °C) und einem Vakuum von 0,08 mbar entfernt. Man erhielt ein Präpolymer, dass sich beim Abkühlen auf Raumtemperatur zu einem weißen Feststoff verfestigte. Man erhielt folgende Eigenschaften:

NCO-Gehalt: 13,4%
Restmonomergehalt: 0,08%
Viskosität bei 50 °C: 185 mPas
Polyetherpolyolgehalt (berechnet): 43,9%
Funktionalität: 2

Präpolymer 2

Es wurden 1680 g HDI vorgelegt, auf 80 °C erhitzt und unter Rühren über 60 min 650 g Poly(tetrahydrofuran) mit einer mittleren Molmasse von 650 g/mol (OH-Zahl 173 mgKOH/g) zugetropft. Es wurde 190 min bei 80 °C nachgerührt bis ein NCO-Gehalt von 32,2% erreicht wurde. Das überschüssige HDI wurde im zweistufigen Kurzwegverdampfer (Vorverdampfer 130 °C, Hauptverdampfer 120 °C) und einem Vakuum von 0,04 mbar entfernt. Man erhielt ein flüssiges Präpolymer mit folgenden Eigenschaften:

NCO-Gehalt: 7,6%
Restmonomergehalt: 0,04%
Viskosität: 1610 mPas
Polyetherpolyolgehalt (berechnet): 67,0%
Funktionalität: 2

Präpolymer 3

Es wurden 2520 g HDI vorgelegt, auf 80 °C erhitzt und unter Rühren über 60 min 1500 g Poly(tetrahydrofuran) mit einer mittleren Molmasse von 1000 g/mol (OH-Zahl 112 mgKOH/g) zugetropft. Es wurde 75 min bei 80 °C nachgerührt bis ein NCO-Gehalt von 27,9% erreicht wurde. Das überschüssige HDI wurde im zweistufigen Kurzwegverdampfer (Vorverdampfer 130 °C, Hauptverdampfer 120 °C) und einem Vakuum von 0,04 mbar entfernt. Man erhielt zunächst ein flüssiges Präpolymer, welches sich über mehrere Tage langsam zu einem weißen Feststoff verfestigte. Es wurden folgende Eigenschaften gemessen:

NCO-Gehalt: 5,7%
Restmonomergehalt: 0,04%
Viskosität: 2200 mPas
Polyetherpolyolgehalt (berechnet): 75,8%
Funktionalität: 2

Präpolymer 4

Es wurden 840 g HDI vorgelegt, auf 80 °C erhitzt und unter Rühren über 60 min 700 g Poly(tetrahydrofuran) mit einer mittleren Molmasse von 1400 g/mol (OH-Zahl 80 mgKOH/g) zugetropft. Es wurde 120 min bei 80 °C nachgerührt bis ein NCO-Gehalt von 24,3% erreicht wurde. Das überschüssige HDI wurde im zweistufigen Kurzwegverdampfer (Vorverdampfer 130 °C, Hauptverdampfer 120 °C) und einem Vakuum von 0,04 mbar entfernt. Man erhielt zunächst ein flüssiges Präpolymer, welches sich über mehrere Tage langsam zu einem weißen Feststoff verfestigte. Es wurden folgende Eigenschaften gemessen:

NCO-Gehalt: 4,4%
Restmonomergehalt: 0,03%
Viskosität: 4780 mPas
Polyetherpolyolgehalt (berechnet): 81,4%
Funktionalität: 2

Präpolymer 5

Es wurden 630 g HDI vorgelegt, auf 80 °C erhitzt und unter Rühren über 105 min 750 g Poly(tetrahydrofuran) mit einer mittleren Molmasse von 2000 g/mol (OH-Zahl 56 mgKOH/g) zugetropft. Es wurde 250 min bei 80 °C nachgerührt bis ein NCO-Gehalt von 20,5% erreicht wurde. Das überschüssige HDI wurde im zweistufigen Kurzwegverdampfer (Vorverdampfer 130 °C, Hauptverdampfer 120 °C) und einem Vakuum von 0,1 mbar entfernt. Man erhielt zunächst ein flüssiges Präpolymer, welches sich über Nacht zu einem weißen Feststoff verfestigte. Es wurden folgende Eigenschaften gemessen:

NCO-Gehalt: 3,2%
Restmonomergehalt: 0,02%
Viskosität bei 40 °C: 2630 mPas
Polyetherpolyolgehalt (berechnet): 86,2%
Funktionalität: 2

Präpolymer 6a

Es wurden 1680 g HDI vorgelegt, auf 80 °C erhitzt und unter Rühren über 60 min 431,5 g Desmophen 1262 BD mit einer mittleren Molmasse von 431,5 g/mol (OH-Zahl 260 mgKOH/g) zugetropft. Es wurde 75 min bei 80 °C nachgerührt bis ein NCO-Gehalt von 35,7% erreicht wurde. Das überschüssige HDI wurde im zweistufigen Kurzwegverdampfer (Vorverdampfer 130 °C, Hauptverdampfer 120 °C) und einem Vakuum von 0,3 mbar entfernt. Man erhielt ein flüssiges Präpolymer.

NCO-Gehalt: 10,3%
Restmonomergehalt: 0,13%
Viskosität: 1730 mPas
Polyetherpolyolgehalt (berechnet): 57,5%
Funktionalität: 2

Präpolymer 6b

Es wurden 2520 g HDI vorgelegt, auf 80 °C erhitzt und unter Rühren über 60 min 647,3 g Desmophen 1262 BD mit einer mittleren Molmasse von 431,5 g/mol (OH-Zahl 260 mgKOH/g) zugetropft. Es wurde 780 min bei 80 °C nachgerührt bis ein NCO-Gehalt von 35,8% erreicht wurde. Das überschüssige HDI wurde im zweistufigen Kurzwegverdampfer (Vorverdampfer 130 °C, Hauptverdampfer 120 °C) und einem Vakuum von 0,4 mbar entfernt. Man erhielt ein flüssiges Präpolymer.

NCO-Gehalt: 10,5%
Restmonomergehalt: 0,78%
Viskosität: 1610 mPas
Polyetherpolyolgehalt (berechnet): 57,0%
Funktionalität: 2

Präpolymer 7

Es wurden 1680 g HDI vorgelegt, auf 80 °C erhitzt und unter Rühren über 90 min 1000 g Desmophen 1110 BD mit einer mittleren Molmasse von 1000 g/mol (OH-Zahl 112 mgKOH/g) zugetropft. Es wurde 260 min bei 80 °C nachgerührt bis ein NCO-Gehalt von 28,0% erreicht wurde. Das überschüssige HDI wurde im zweistufigen Kurzwegverdampfer (Vorverdampfer 130 °C, Hauptverdampfer 120 °C) und einem Vakuum von 0,08 mbar entfernt. Man erhielt ein flüssiges Präpolymer.

NCO-Gehalt: 5,9%
Restmonomergehalt: 0,04%
Viskosität: 1500 mPas
Polyetherpolyolgehalt (berechnet): 75,8%
Funktionalität: 2

Präpolymer 8

Es wurden 840 g HDI vorgelegt, auf 80 °C erhitzt und unter Rühren über 90 min 1000 g Desmophen 2060 BD mit einer mittleren Molmasse von 2000 g/mol (OH-Zahl 56 mgKOH/g) zugetropft. Es wurde 600 min bei 80 °C nachgerührt bis ein NCO-Gehalt von 20,5% erreicht wurde. Das überschüssige HDI wurde im zweistufigen Kurzwegverdampfer (Vorverdampfer 130 °C, Hauptverdampfer 120 °C) und einem Vakuum von 0,04 mbar entfernt. Man erhielt ein flüssiges Präpolymer.

NCO-Gehalt: 3,3%
Restmonomergehalt: 0,03%
Viskosität: 1530 mPas
Polyetherpolyolgehalt (berechnet): 86,2%
Funktionalität: 2

Präpolymer 9

Es wurden 1680 g HDI vorgelegt, auf 80 °C erhitzt und unter Rühren über 120 min 1000 g Ecoprol H1000 mit einer mittleren Molmasse von 2000 g/mol (OH-Zahl 56 mgKOH/g) zugetropft. Es wurde 150 min bei 80 °C nachgerührt bis ein NCO-Gehalt von 28,0% erreicht wurde. Das überschüssige HDI wurde im zweistufigen Kurzwegverdampfer (Vorverdampfer 130 °C, Hauptverdampfer 120 °C) und einem Vakuum von 0,08 mbar entfernt. Man erhielt ein flüssiges Präpolymer.

NCO-Gehalt: 5,8%
Restmonomergehalt: 0,07%
Viskosität: 1670 mPas
Polyetherpolyolgehalt (berechnet): 75,8%
Funktionalität: 2

Präpolymer 10

Es wurden 840 g HDI vorgelegt, auf 80 °C erhitzt und unter Rühren über 60 min 1000 g Ecoprol H2000 mit einer mittleren Molmasse von 2000 g/mol (OH-Zahl 56 mgKOH/g) zugetropft. Es wurde 284 min bei 80 °C nachgerührt bis ein NCO-Gehalt von 20,5% erreicht wurde. Das überschüssige HDI wurde im zweistufigen Kurzwegverdampfer (Vorverdampfer 130 °C, Hauptverdampfer 120 °C) und einem Vakuum von 0,04 mbar entfernt. Man erhielt ein flüssiges Präpolymer.

NCO-Gehalt: 3,3%
Restmonomergehalt: 0,07%
Viskosität: 4520 mPas
Polyetherpolyolgehalt (berechnet): 86,2%
Funktionalität: 2

Präpolymer 11

Synthese gemäß US20040067315, Beispiel 3.

NCO-Gehalt: 1,8%
Viskosität: 13900 mPas
Polyetherpolyolgehalt (berechnet): 90,0%
Konzentration an Komponenten mit F > 2: 0,045 mol/kg

**Tabelle 1: Herstellung von Beschichtungsmassen**

| | Beispiel 1 | Beispiel 2 | Beispiel 3 | Beispiel 4 | Beispiel 5 | Beispiel 6 | Beispiel 7 |
|---|---|---|---|---|---|---|---|
| Präpolymer | | | | | | | |
| 1 | 62,68 | 35,90 | | | | | |
| 2 | | 35,90 | 77,37 | | | | |
| 3 | | | | 87,17 | | | 81,85 |
| 4 | | | | | 95,46 | | |
| 5 | | | | | | 98,40 | |
| Desmodur N 3600 | | | | | | | |
| Desmophen NH 1420 | 55,40 | 49,70 | 38,78 | 32,83 | 27,70 | 20,80 | 32,96 |
| Summe | 118,08 | 121,50 | 116,15 | 120,00 | 123,16 | 119,20 | 114,81 |
| NCO/NH | 1,0 | 1,0 | 1,0 | 1,0 | 1,0 | 1,0 | 0,95 |

(fortgesetzt)

Fortsetzung Tabelle 1:

| | Beispiel 8 | Beispiel 9 | Beispiel 10 | Beispiel 11 | Beispiel 12 |
|---|---|---|---|---|---|
| Präpolymer | | | | | |
| 3 | 90,50 | 83,26 | | | |
| 6a | | | 73,44 | | |
| 6b | | | | 54,82 | 36,46 |
| 7 | | | | 27,08 | 49,59 |
| Desmophen NH 1420 | 32,96 | 27,70 | 49,86 | 48,09 | 43,96 |
| Summe | 123,46 | 110,96 | 123,30 | 129,99 | 130,01 |
| NCO/NH | 1,05 | 1,15 | 1,0 | 1,0 | 1,0 |

Fortsetzung Tabelle 1:

| | Beispiel 13 | Beispiel 14 | Beispiel 15 | Beispiel 16 |
|---|---|---|---|---|
| Präpolymer | | | | |
| 7 | 88,42 | 79,19 | 79,22 | 63,42 |
| Desmodur N 3600 | | | 4,38 | 13,02 |
| HDI | | 2,57 | | |
| Desmophen NH 1420 | 33,24 | 38,24 | 36,6 | 43,55 |
| Summe | 121,66 | 120,00 | 120,20 | 119,99 |
| NCO/NH | 1,0 | 1,0 | 1,0 | 1,0 |

| | Beispiel 17 | Beispiel 18 | Beispiel 19 | Beispiel 20 | Beispiel 21 | Beispiel 22 |
|---|---|---|---|---|---|---|
| Präpolymer | | | | | | |
| 8 | 98,82 | 90,50 | 83,57 | 69,70 | 55,86 | 42,03 |
| Desmodur N 3600 | | 3,66 | 7,04 | 13,79 | 20,53 | 27,27 |
| Desmophen NH 1420 | 22,16 | 25,83 | 29,39 | 36,51 | 43,61 | 50,70 |
| Summe | 120,98 | 119,99 | 120,00 | 120,00 | 120,00 | 120,00 |
| NCO/NH | 1,0 | 1,0 | 1,0 | 1,0 | 1,0 | 1,0 |

(fortgesetzt)

| Fortsetzung Tabelle 1: | | | | | |
|---|---|---|---|---|---|
| | Beispiel 23 | Beispiel 24 | Beispiel 25 | Beispiel 26 | |
| Präpolymer | | | | | |
| 9 | 86,90 | 79,22 | 63,42 | 47,64 | |
| Desmodur N 3600 | | 4,17 | 12,86 | 21,54 | |
| Desmophen NH 1420 | 33,24 | 36,61 | 43,72 | 50,82 | |
| Summe | 120,14 | 120,00 | 120,00 | 120,00 | |
| NCO/NH | 1,0 | 1,0 | 1,0 | 1,0 | |
| | Beispiel 27 | Beispiel 28 | Beispiel 29 | Beispiel 30 | Beispiel 31 |
| Präpolymer | | | | | |
| 10 | 98,54 | 90,50 | 83,53 | 69,62 | 55,71 |
| Desmodur N 3600 | | 3,89 | 7,26 | 14,00 | 20,74 |
| Desmophen NH 1420 | 21,46 | 25,60 | 29,20 | 36,39 | 43,56 |
| Summe | 120,00 | 119,99 | 119,99 | 120,01 | 120,01 |
| NCO/NH | 1,0 | 1,0 | 1,0 | 1,0 | 1,0 |
| Fortsetzung Tabelle 1: | | | | | |
| | Beispiel 32 | Beispiel 33 | Beispiel 34 | | |
| Präpolymer | | | | | |
| 11 | 110,25 | 105,00 | | | |
| Desmodur E 30600 | | | 86,70 | | |
| Desmophen NH 1420 | 13,85 | 13,85 | 36,00 | | |
| Summe | 124,10 | 118,85 | 122,70 | | |
| NCO/NH | 1,05 | 1,00 | 1,0 | | |

Gemäß der Rezepturen in Tabelle 1 wurden das Präpolymer vorgelegt und Desmophen® NH 1420 zugegeben. Die Mischung wurde anschließend für 1 min im Speedmixer DAC 150 Z homogenisiert.

Beispiel 35

Beschichtungsmasse gemäß WO2020/260578 A1 Beschichtung 6.

**Herstellung von Filmen**

Die Beschichtungsmassen aus den Beispielen 1-35 wurden in Formen gegossen. Für Selbstheilungstests wurden ca. 5 mm dicke und für dynamisch mechanische Analyse wurden ca. 3 mm dicke Filme hergestellt. Die Filme härteten mindestens 14 Tage bei Raumtemperatur aus.

Tabelle 2 gibt eine Übersicht über die Filmeigenschaften.

**Tabelle 2: Filmeigenschaften der aus den Beschichtungsmassen 1-35 hergestellten Filmen**

| Beispiel | Diisocyanat -E | Polyetherpolyol B2 | Molare Masse Polyol [g/mol] | $G_F$ [mol/kg] | Gx [Gew.-%] | Tg (max. Tangens delta, 1 Hz) [°C] | Speichermodul G' (23 °C, 1Hz) [MPa] | Bruchspannung [MPa] | Bruchdehnung [%] | Bruchspannung nach Heilung [MPa] | Bruchdehnung nach Heilung [%] |
|---|---|---|---|---|---|---|---|---|---|---|---|
| 1 (V) | HDI | PTHF | 250 | 0 | 23 | 43 | 345 | 19,2 | 245 | 0* | 0* |
| 2 (E) | HDI | PTHF | mixture of 250 and 650 | 0 | 36 | 20 | 4,3 | 2,4 | 438 | 1,1 | 132 |
| 3 (E) | HDI | PTHF | 650 | 0 | 45 | -4 | 1,4 | 1,9 | 759 | 0,7 | 97 |
| 4 (E) | HDI | PTHF | 1000 | 0 | 55 | -17 | 1,3 | 3,4 | 972 | 1,0 | 112 |
| 5 (E) | HDI | PTHF | 1400 | 0 | 63 | -39 | 0,9 | 1,4 | 835 | 0,7 | 188 |
| 6 (V) | HDI | PTHF | 2000 | 0 | 73 | -19** | 26,5 | 3,8 | 462 | 0* | 0* |
| 7 (E) | HDI | PTHF | 1000 | 0 | 54 | -23 | 1,3 | 2,7 | 1011 | 0,7 | 125 |
| 8 (E) | HDI | PTHF | 1000 | 0 | 56 | -23 | 1,3 | 1,4 | 705 | 0,6 | 97 |
| 9 (E) | HDI | PTHF | 1000 | 0 | 57 | -26 | 1,6 | 1,2 | 654 | 0,5 | 171 |
| 10 (V) | HDI | PPG | 431,5 | 0 | 34 | 27 | 21 | 18 | 362 | 0* | 0* |
| 11 (E) | HDI | PPG | Mischung aus 431,5 und 1000 | 0 | 40 | 14 | 2,0 | 2,9 | 635 | 0,9 | 273 |
| 12 (E) | HDI | PPG | Mischung aus 431,5 und 1000 | 0 | 45 | 7 | 1,4 | 2,1 | 769 | 0,6 | 228 |
| 13 (V) | HDI | PPG | 1000 | 0 | 55 | -16 | 0,6 | > 0,17 | > 1549 | 0,2 | 886 |
| 14 (V) | HDI | PPG | 1000 | 0 | 50 | -6 | 0,7 | 0,7 | 957 | 0,2 | 449 |
| 15 (E) | HDI | PPG | 1000 | 0,05 | 50 | -5 | 0,8 | 4,8 | 523 | 0,4 | 45 |
| 16 (V) | HDI | PPG | 1000 | 0,15 | 40 | 23 | 7,0 | 12,4 | 269 | 0* | 0* |
| 17 (V) | HDI | PPG | 2000 | 0 | 70 | -40 | 0,4 | 0,08 | 1578 | 0,04 | 1120 |
| 18 (V) | HDI | PPG | 2000 | 0,04 | 65 | -38 | 0,7 | 3,5 | 629 | 0,4 | 125 |

(fortgesetzt)

| Beispiel | Diisocyanat -E | Polyetherpolyol B2 | Molare Masse Polyol [g/mol] | $G_F$ [mol/kg] | Gx [Gew.-%] | Tg (max. Tangens delta, 1 Hz) [°C] | Speichermodul G' (23 °C, 1Hz) [MPa] | Bruchspannung [MPa] | Bruchdehnung [%] | Bruchspannung nach Heilung [MPa] | Bruchdehnung nach Heilung [%] |
|---|---|---|---|---|---|---|---|---|---|---|---|
| 19 (E) | HDI | PPG | 2000 | 0,08 | 60 | -39/-4*** | 1,1 | 4,1 | 378 | 0,7 | 83 |
| 20 (V) | HDI | PPG | 2000 | 0,16 | 50 | -43/32*** | 11 | 6,7 | 202 | 1,5 | 24 |
| 21 (V) | HDI | PPG | 2000 | 0,24 | 40 | -40/62*** | 68 | 12,1 | 161 | 0* | 0* |
| 22 (V) | HDI | PPG | 2000 | 0,32 | 30 | -39/72*** | 94 | 15,1 | 104 | 0* | 0* |
| 23 (E) | HDI | PO3G | 1000 | 0 | 55 | -17 | 1,3 | >4,5 | > 1144 | 0,6 | 112 |
| 24 (E) | HDI | PO3G | 1000 | 0,05 | 50 | -7 | 2,3 | 6,0 | 441 | 0,7 | 46 |
| 25 (V) | HDI | PO3G | 1000 | 0,15 | 40 | 23 | 9,4 | 10,1 | 239 | 1,4 | 40 |
| 26 (V) | HDI | PO3G | 1000 | 0,25 | 30 | 49 | 140 | 16,7 | 141 | 0* | 0* |
| 27 (E) | HDI | PO3G | 2000 | 0 | 71 | -44 | 1,2 | > 1,4 | > 1584 | 0,5 | 154 |
| 28 (E) | HDI | PO3G | 2000 | 0,05 | 65 | -52/-15*** | 1,4 | 1,9 | 328 | 0,7 | 56 |
| 29 (V) | HDI | PO3G | 2000 | 0,09 | 60 | -56/8*** | 3,3 | 2,9 | 222 | 0,8 | 32 |
| 30 (V) | HDI | PO3G | 2000 | 0,16 | 50 | -59/50*** | 24 | 7,2 | 191 | 2,1 | 20 |
| 31 (V) | HDI | PO3G | 2000 | 0,24 | 40 | -60/70*** | 61 | 13,2 | 179 | 0,7 | 1 |
| 32 (V) | IPDI | PPG | Mischung aus 4000 und 6000 | 0,04 | 81 | -49 | 0,3 | 1,4 | 781 | 0,3 | 128 |
| 33 (V) | IPDI | PPG | Mischung aus 4000 und 6000 | 0,04 | 80 | -49 | 0,3 | 2,6 | 1144 | 0,3 | 133 |

(fortgesetzt)

| Beispiel | Diisocyanat -E | Polyetherpolyol B2 | Molare Masse Polyol [g/mol] | $G_F$ [mol/kg] | Gx [Gew.-%] | Tg (max. Tangens delta, 1 Hz) [°C] | Speichermodul G' (23 °C, 1Hz) [MPa] | Bruchspannung [MPa] | Bruchdehnung [%] | Bruchspannung nach Heilung [MPa] | Bruchdehnung nach Heilung [%] |
|---|---|---|---|---|---|---|---|---|---|---|---|
| 34 (V) | HDI | PPG | 2000 | 0,26 | 53 | -32/7 | 1,9 | 1,9 | 73 | 0* | 0* |
| 35 (V) | HDI | PPG | 2000 | 0,26 | 67**** | -25 | 0,9 | 2,2 | 88 | 0* | 0* |

* Kein Zugversuch möglich, da das Material keine Selbstheilung zeigt.
** Zusätzlich zu einen breiten Glasübergang um -19,2 °C zeigt diese Beschichtung einen Schmelzpunkt mit einem Schmelzbeginn bei ca. 30 °C.
*** Beschichtung zeigt zwei Glasübergangstemperaturen.
**** Beispiel 35 entspricht Beschichtung 6 der WO2020/260578 A1 und basiert auf einem Polyether-Allophanat-Prepolymer, sowie einem Polyetheraspartat. Der Polyetherpolyamingehalt des Aspartats wurde bei der Berechnung von Gx entsprechend berücksichtigt.

In Tabelle 2 werden die Filmeigenschaften der aus den Beschichtungsmassen 1-35 hergestellten Filmen dargestellt. Die Beispiele 1-9 zeigen Beschichtungen, die Poly(tetrahydrofuran) enthalten. Ausreichende Selbstheilungseigenschaften werden nur bei Poly(tetrahydrofuran)-Gehalten zwischen 35 und 72% beobachtet. Die Beispiele 7 bis 9 wurden bei verschiedenen NCO:NH-Verhältnissen von 0,95, 1,05 und 1,15 hergestellt und demonstrieren, dass die Aufgabe mit verschiedenen NCO:NH-Verhältnissen erfüllt werden kann. Die Beispiele 10-22 sowie 32-35 zeigen Beschichtungen, die Poly(propylenglycol) enthalten. Analog zu Poly(tetrahydrofuran) zeigen Beschichtungen mit Poly(propylenglycol)-Gehalten unter 35% keine Selbstheilung (siehe Beispiele 10 und 22). Im Unterschied zu Poly(tetrahydrofuran) können Beschichtungen mit Poly(propylenglycol) auch bei sehr hohen Gehalten an Poly(propylenglycol) Selbstheilungseigenschaften zeigen (siehe Beispiele 17, 32, 33), aber diese weisen dann hohe Klebrigkeit auf. Beispiel 32 wurde gemäß US20040067315 Table 1 Entry 9 durchgeführt. Die erhöhte Klebrigkeit wird durch die sehr niedrigen Speichermodule belegt. Schwach vernetzte Beschichtungen ($G_F$ = 0 bis < 0,05 mol/kg) werden ab einem Poly(propylenglycol)-Gehalt von 50% zu klebrig, d.h. der Speichermodul beträgt 0,7 oder weniger. Dies kann teilweise durch Vernetzung kompensiert werden (siehe Beispiel 15 und 19 mit $G_F \geq 0{,}05$). Bei zu viel Vernetzung gehen die Selbstheilungseigenschaften aber wieder verloren (siehe Beispiele 16, 20, 21, 34, 35). Beispiel 35 wurde gemäß WO20260578 Coating 6 durchgeführt. Die Beispiele 23 bis 31 zeigen Beschichtungen, die Poly(1,3-propandiol) enthalten. Analog zu den Beschichtungsmassen mit Poly(tetrahydrofüran), zeigen Beschichtungsmassen mit Poly(1,3-propandiol) Selbstheilungseigenschaften im Bereich $Gx \geq 35\%$ bis $\leq 72\%$ und $G_F < 0{,}09$ mol/kg.

## Patentansprüche

1. Gegenstand der vorliegenden Erfindung sind zweikomponentige Beschichtungszusammensetzungen (2K-Beschichtungsmittel), enthaltend

a) mindestens eine Polyasparaginsäureester-haltige Komponente A, welche

einen oder mehrere Polyasparaginsäureester der allgemeinen Formel (I)

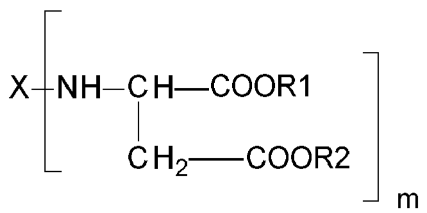

(I),

in welcher
m für eine ganze Zahl >1, bevorzugt für 2 steht,
X für einen m-wertigen, gegebenenfalls ein oder mehrere Heteroatome enthaltenden organischen Rest steht, wie er durch Entfernung der primären Aminogruppen aus einem (cyclo)aliphatisch bzw. araliphatisch gebundene primäre Aminogruppen aufweisenden Polyamin oder Polyetheramin des Molekulargewichtsbereichs 60 bis 6000 g/mol erhalten werden kann, und der weitere, gegenüber Isocyanatgruppen reaktive und/oder bei Temperaturen bis 100°C inerte funktionelle Gruppen enthalten kann, und die Reste R1 und R2 für gleiche oder verschiedene organische Reste mit je 1 bis 18 Kohlenstoffatomen stehen,

und gegebenenfalls einen oder mehrere Polyasparaginsäureester der allgemeinen Formel (II)

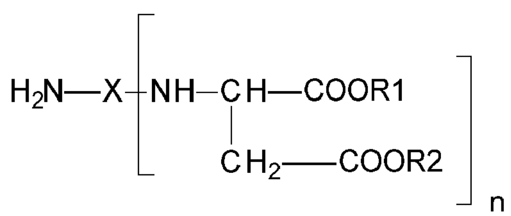

(II),

in welcher n für m-1 steht, und X und die Reste R1 und R2 die oben stehende Bedeutung haben,

enthält oder daraus besteht und erhältlich ist durch Umsetzung

a1) wenigstens eines Polyamins oder Polyetherpolyamins der allgemeinen Formel (III),

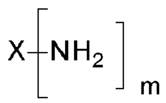

(III),

in welcher m und X die oben stehende Bedeutung haben, mit
a2) wenigstens einer Verbindung der allgemeinen Formel (IV)

R1OOC-CH=CH-COOR2 (IV),

in welcher R1 und R2 die oben stehende Bedeutung haben,

b) mindestens ein NCO-funktionelles Polyurethan-Prepolymer (Komponente/n B), welches erhältlich ist durch Umsetzung

b1) wenigstens eines Polyisocyanats (Komponente/n B1) mit
b2) wenigstens einem Polyetherpolyol mit linearen Ethergruppen und/oder verzweigten Ethergruppen der folgenden allgemeinen Formeln (V) bis (VII):

$-O-(CH_2)_x-$ (V), wobei x = 2 bis 10,
$-O-CR^3R^4-CH_2-$ (VI), wobei $R^3$ und $R^4$ unabhängig voneinander sind und für Wasserstoff oder einen aliphatischen linearen oder verzweigten, gesättigten oder ungesättigten Rest mit bis zu 10 Kohlenstoffatomen, der auch Sauerstoffatome aufweisen kann, oder für einen aromatischen Rest mit bis zu 10 Kohlenstoffatomen stehen, wobei jedoch wenigstens einer der Reste $R^3$ oder $R^4$ kein Wasserstoff ist, und
$- O-CR^5R^6-CR^7R^8-$ (VII), wobei $R^5$ bis $R^8$ unabhängig voneinander sind und wobei $R^5$ und $R^7$ für Wasserstoff oder einen aliphatischen linearen oder verzweigten, gesättigten oder ungesättigten Rest mit bis zu 10 Kohlenstoffatomen, der auch Sauerstoffatome aufweisen kann, stehen und $R^6$ und $R^8$ für einen aliphatischen linearen oder verzweigten, gesättigten oder ungesättigten Rest mit bis zu 10 Kohlenstoffatomen, der auch Sauerstoffatome aufweisen kann, stehen oder $R^6$ und $R^8$ derart miteinander verknüpft sind, dass ein gesättigter oder ungesättigter Ring mit bis zu 8 Kohlenstoffatomen gebildet wird, der mit organischen Resten substituiert sein kann,
(Komponente/n B2),

b3) gegebenenfalls wenigstens einem, von B2 verschiedenen Polyol (Komponente/n B3),

c) gegebenenfalls eine oder mehrere, von A verschiedene, gegenüber Isocyanatgruppen reaktionsfähige Komponenten C,
d) gegebenenfalls eine oder mehrere, von B verschiedene Isocyanatkomponenten D, ausgewählt aus der Gruppe umfassend di) modifizierte Polyisocyanate, erhältlich aus der Umsetzung monomerer Polyisocyanate mit Polyolen, (Komponente/n D1) und dii) weitere, von di) verschiedene Isocyanatkomponenten (Komponente/n D2),
e) - gegebenenfalls Hilfs- und/oder Zusatzstoffe, ausgenommen solche der Komponenten E2 und E3, (Komponente/n E1)

- gegebenenfalls anorganische Füllstoffe und/oder anorganische Pigmente (Komponente/n E2) und/oder
- gegebenenfalls Lösungsmittel (Komponente/n E3),

wobei $G_x$ definiert wird als

die Gesamtmenge an

- in die Polyasparaginsäureester der Polyasparaginsäureester-haltigen Komponente A eingebauten Polyetherpolyamine der Formel III,
- in den Polyurethan-Prepolymeren B eingebauten Polyetherpolyolen B2 und PolyolenB3,
- Polyolen und Polyetherpolyaminen, die unter Komponente C fallen, und
- in den modifizierten Polyisocyanaten D1 eingebauten Polyolen,

bezogen auf das Gesamtgewicht der Komponenten A bisE1,

und $G_F$ definiert wird als

die Gesamtmenge der Komponenten A bis D, die eine Funktionalität > 2 aufweisen, bezogen auf 1 kg der Komponenten A bis E1,
wobei die Funktionalität die Isocyanatgruppen und Isocyanat-reaktiven Gruppen umfasst,

und wobei gilt:

i) wenn Komponente B2 ≤ 100 bis ≥ 70 Gewichtsprozent lineare Ethergruppen und ≥ 0 bis ≤ 30 Gewichtsprozent verzweigte Ethergruppen, jeweils bezogen auf die Gesamtmenge an linearen und verzweigten Ethergruppen der Komponente B2, umfasst, so betragen $G_x$ ≥ 35 bis ≤ 72 Gewichtsprozent und $G_F$ ≥ 0 bis < 0,09 Mol/kg, und
ii) wenn Komponente B2 ≥ 0 bis < 70 Gewichtsprozent lineare Ethergruppen und ≤ 100 bis > 30 Gewichtsprozent verzweigte Ethergruppen, jeweils bezogen auf die Gesamtmenge an linearen und verzweigten Ethergruppen der Komponente B2, umfasst, und

$ii_1$) $G_F$ ≥ 0 bis < 0,05 Mol/kg beträgt, so beträgt $G_X$≥ 35 bis < 50 Gewichtsprozent, oder
$ii_2$) $G_F$ ≥ 0,05 bis < 0,09 Mol/kg beträgt, so beträgt $G_X$≥ 35 bis ≤ 65 Gewichtsprozent.

**2.** Zweikomponentige Beschichtungszusammensetzungen (2K-Beschichtungsmittel) gemäß Anspruch 1, wobei gilt: Komponente B2 umfasst ≤ 100 bis ≥ 70 Gewichtsprozent lineare Ethergruppen und ≥ 0 bis ≤ 30 Gewichtsprozent verzweigte Ethergruppen, jeweils bezogen auf die Gesamtmenge an linearen und verzweigten Ethergruppen der Komponente B2, und $G_x$ beträgt ≥ 35 bis ≤ 72 Gewichtsprozent und $G_F$ beträgt ≥ 0 bis < 0,09 Mol/kg.

**3.** Zweikomponentige Beschichtungszusammensetzungen (2K-Beschichtungsmittel) gemäß Anspruch 1, wobei für Ausführungsform i) gilt, bzw. Anspruch 2, wobei gilt:
Gx beträgt ≥ 35 bis ≤ 72 Gewichtsprozent und $G_F$ beträgt ≥ 0 bis ≤ 0,08 Mol/kg, bevorzugt ≥ 0 bis ≤ 0,05 Mol/kg.

**4.** Zweikomponentige Beschichtungszusammensetzungen (2K-Beschichtungsmittel) gemäß Anspruch 1, wobei für Ausführungsform i) gilt, bzw. Anspruch 2, wobei gilt:
Gx beträgt ≥ 40 bis ≤ 68 Gewichtsprozent und $G_F$ beträgt ≥ 0 bis < 0,09 Mol/kg, bevorzugt ≥ 0 bis ≤ 0,08 Mol/kg, besonders bevorzugt ≥ 0 bis ≤ 0,05 Mol/kg.

**5.** Zweikomponentige Beschichtungszusammensetzungen (2K-Beschichtungsmittel) gemäß Anspruch 1, wobei für Ausführungsform $ii_2$) gilt:
$G_F$ beträgt ≥ 0,05 bis < 0,08 Mol/kg und Gx beträgt ≥ 35 bis ≤ 65 Gewichtsprozent.

**6.** Zweikomponentige Beschichtungszusammensetzungen (2K-Beschichtungsmittel) gemäß einem der Ansprüche 1 bis 5, wobei die Polyisocyanatkomponente/n B1 ausgewählt ist/sind aus der Gruppe umfassend: monomere Diisocyanate des Molekulargewichtsbereichs 140 bis 400 g/mol mit linearaliphatisch, cycloaliphatisch, araliphatisch und/oder aromatisch gebundenen Isocyanatgruppen und Polyisocyanate einer NCO-Funktionalität ≥ 2 mit Uretdion-, Isocyanurat- , Allophanat-, Harnstoff-, Biuret-, Iminooxadiazindion- und/oder Oxadiazintrionstrukturen mit linearaliphatisch, cycloaliphatisch, araliphatisch und/oder aromatisch gebundenen Isocyanatgruppen.

**7.** Zweikomponentige Beschichtungszusammensetzungen (2K-Beschichtungsmittel) gemäß einem der Ansprüche 1 bis 5, wobei die Polyisocyanatkomponente/n B1 ausgewählt ist/sind aus monomeren Diisocyanate des Molekulargewichtsbereichs 140 bis 400 g/mol mit ausschließlich linearaliphatisch und/oder cycloaliphatisch gebundenen Isocyanatgruppen.

**8.** Zweikomponentige Beschichtungszusammensetzungen (2K-Beschichtungsmittel) gemäß einem der Ansprüche 1

bis 7, wobei x in Formel (V) für 2 bis 6, bevorzugt 2 bis 4 steht.

**9.** Zweikomponentige Beschichtungszusammensetzungen (2K-Beschichtungsmittel) gemäß einem der Ansprüche 1 bis 8, wobei für Formel (VI) gilt: $R^3$ steht für Wasserstoff und $R^4$ für einen aliphatischen linearen oder verzweigten, gesättigten oder ungesättigten Rest mit bis zu 10 Kohlenstoffatomen.

**10.** Zweikomponentige Beschichtungszusammensetzungen (2K-Beschichtungsmittel) gemäß einem der Ansprüche 1 bis 8, wobei für Formel (VI) gilt: $R^3$ steht für Wasserstoff und $R^4$ für einen aliphatischen linearen oder verzweigten, gesättigten Rest mit bis zu 6 Kohlenstoffatomen, bevorzugt für einen Methylrest.

**11.** Verfahren zum Herstellen einer Beschichtung auf einem Substrat, welches mindestens folgende Schritte umfasst:

i) Aufbringen einer zweikomponentigen Beschichtungszusammensetzung gemäß einem der Ansprüche 1 bis 10 auf mindestens einen Teil eines zu beschichtenden Substrats, und
ii) Härten der Beschichtungszusammensetzung aus Schritt i).

**12.** Substrate beschichtet mit einer Beschichtung, erhältlich nach einem Verfahren gemäß Anspruch 11.

**13.** Verfahren zum Herstellen einer Beschichtung auf einem Substrat gemäß Anspruch 11, oder Substrate beschichtet mit einer Beschichtung gemäß Anspruch 12, **dadurch gekennzeichnet, dass** es sich bei der Beschichtung um eine Schutzbeschichtungen handelt für Objekte, die mechanischen Belastungen ausgesetzt sind.

**14.** Verfahren zum Herstellen einer Beschichtung auf einem Substrat gemäß Anspruch 11 oder 13, oder Substrate beschichtet mit einer Beschichtung gemäß Anspruch 12 oder 13, **dadurch gekennzeichnet, dass** es sich es sich um eine Beschichtung für Rotorblätter von Windkraftanlagen oder Hubschraubern, für Flugzeugflügel oder Schiffsschrauben handelt.

**15.** Verwendung einer zweikomponentigen Beschichtungszusammensetzung (2K-Beschichtungsmittel) gemäß einem der Ansprüche 1 bis 10 zur Herstellung von Beschichtungen auf Substraten.

Europäisches Patentamt
European Patent Office
Office européen des brevets

# EUROPÄISCHER RECHERCHENBERICHT

Nummer der Anmeldung
EP 22 16 9156

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2021/355347 A1 (ZHENG JUNCHAO [CN] ET AL) 18. November 2021 (2021-11-18)<br>* Absatz [0001]; Ansprüche 1-18 *<br>* Absatz [0222] - Absatz [0283]; Beispiele 1-23; Tabellen 1-7 *<br>----- | 1-15 | INV.<br>C08G18/10<br>C08G18/38<br>C08G18/48<br>C08G18/73<br>C09D175/06 |
| X | WO 2004/033517 A1 (BAYER MATERIALSCIENCE AG [DE]; NIESTEN MEIKE [DE] ET AL.) 22. April 2004 (2004-04-22)<br>* Seite 1, Zeile 3 - Zeile 7; Ansprüche 1-4 *<br>* Seite 8, Zeile 1 - Seite 10, Zeile 15; Beispiele 1-5; Tabelle 1 *<br>----- | 1-15 | |

RECHERCHIERTE SACHGEBIETE (IPC)
C08G
C09D

Der vorliegende Recherchenbericht wurde für alle Patentansprüche erstellt

3

| Recherchenort | Abschlußdatum der Recherche | Prüfer |
|---|---|---|
| München | 20. September 2022 | Paulus, Florian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 22 16 9156

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-09-2022

| Im Recherchenbericht angeführtes Patentdokument | Datum der Veröffentlichung | Mitglied(er) der Patentfamilie | Datum der Veröffentlichung |
|---|---|---|---|
| US 2021355347 A1 | 18-11-2021 | EP 3877437 A1 | 15-09-2021 |
| | | US 2021355347 A1 | 18-11-2021 |
| | | WO 2020094689 A1 | 14-05-2020 |
| WO 2004033517 A1 | 22-04-2004 | AT 370976 T | 15-09-2007 |
| | | AU 2003270263 A1 | 04-05-2004 |
| | | DE 10246708 A1 | 15-04-2004 |
| | | DK 1551894 T3 | 29-10-2007 |
| | | EP 1551894 A1 | 13-07-2005 |
| | | ES 2291667 T3 | 01-03-2008 |
| | | US 2004067315 A1 | 08-04-2004 |
| | | WO 2004033517 A1 | 22-04-2004 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0403921 A
- EP 0639628 A
- EP 0667362 A
- EP 0689881 A
- US 5214086 A
- EP 0699696 A
- EP 0596360 A
- EP 0893458 A
- DE 19701835
- US 5243012 A
- WO 2004033517 A1
- WO 2020016292 A1
- WO 2020094689 A1
- WO 2020094689 A
- WO 2020260578 A1
- WO 2021055398 A1
- DE 1670666 A
- DE 1954093 A
- DE 2414413 A
- DE 2452532 A
- DE 2641380 A
- DE 3700209 A
- DE 3900053 A
- DE 3928503 A
- EP 0336205 A
- EP 0339396 A
- EP 0798299 A
- DE 870400 A
- DE 953012 A
- DE 1090196 A
- EP 0546399 A
- CN 105218780
- CN 103881050
- CN 101717571
- US 3183112 A
- EP 0416338 A
- EP 0751163 A
- EP 1378529 A
- EP 1378530 A
- EP 2174967 A
- JP 63260915 B
- JP 56059828 B
- DE 2622951 B
- EP 0978523 A
- WO 2011069966 A
- WO 05058996 A
- WO 9422968 A
- EP 0276501 A
- EP 0249201 A
- WO 9712945 A
- US 20040067315 A
- WO 20260578 A

### In der Beschreibung aufgeführte Nicht-Patentliteratur

- **P. J. FLORY.** Molecular Size Distribution in Linear Condensation Polymers. *JACS,* 1936, 1877-1885
- *J. Prakt. Chem.,* 1994, vol. 336, 185-200
- *Angew. Chem.,* 1960, vol. 72, 927
- **H. KITTEL ; VERLAG W.A.** Lehrbuch der Lacke und Beschichtungen, Band III, Lösemittel, Weichmacher, Additive, Zwischenprodukte. *Colomb in der Heenemann GmbH, Berlin-Oberschwandorf,* 1976, 237-398